(19) **Europäisches Patentamt / European Patent Office / Office européen des brevets**

(11) **EP 3 125 157 A1**

(12) **EUROPEAN PATENT APPLICATION**

(43) Date of publication:
   **01.02.2017 Bulletin 2017/05**

(51) Int Cl.:
   ***G06K 9/00*** *(2006.01)*

(21) Application number: **16181226.8**

(22) Date of filing: **26.07.2016**

<table>
<tr><td>

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**
   Designated Extension States:
   **BA ME**
   Designated Validation States:
   **MA MD**

(30) Priority: **28.07.2015 JP 2015148703**

(71) Applicant: **Seiko Epson Corporation Tokyo 160-8801 (JP)**

</td><td>

(72) Inventors:
   • **Hagiwara, Norihisa**
     **Nagano, 392-8502 (JP)**
   • **Kodaira, Kenya**
     **Nagano, 392-8502 (JP)**
   • **Ito, Tsuyoshi**
     **Nagano, 392-8502 (JP)**
   • **Ito, Kazuhiro**
     **Tokyo, 107-6012 (JP)**

(74) Representative: **Hoffmann Eitle Patent- und Rechtsanwälte PartmbB Arabellastraße 30 81925 München (DE)**

</td></tr>
</table>

(54) **APPARATUS, SYSTEM, RECORDING MEDIUM AND METHOD FOR DETERMINING GOLF SWING TYPE**

(57) A calculation apparatus includes a processing section that performs determination of a swing type on the basis of information regarding an attitude or a position of an exercise appliance at a predetermined timing during a backswing.

EP 3 125 157 A1

**Description**

BACKGROUND

1. Technical Field

The present invention relates to a calculation apparatus, a calculation system, a calculation method, and a recording medium.

2. Related Art

In the related art, in order to check a golf swing, it is effective to capture an image of the swing. For example, JP-A-2004-129687 discloses a technique in which a downswing is subjected to image processing by using a direct linear transformation method (DLT method) using a high-speed camera, and thus a swing pattern of a golfer is classified.

However, in the technique disclosed in JP-A-2004-129687, since a period of time spent on a downswing which is evaluated in order to classify a swing pattern is considerably shorter than a period of time spent on a backswing, obtained information is restricted, and thus a swing pattern is insufficiently classified.

SUMMARY

An advantage of some aspects of the invention is to provide a calculation apparatus, a calculation system, a calculation method, and a recording medium, capable of determining a swing type by focusing on the fact that a tendency of a downswing depends on a backswing and by analyzing an attitude or a position of an exercise appliance during a backswing.

The invention can be implemented as the following forms or application examples.

Application Example 1

A calculation apparatus according to this application example includes a processing section that performs determination of a swing type on the basis of information regarding an attitude or a position of an exercise appliance at a predetermined timing during a backswing.

Since it is considered that a tendency for a user to perform a downswing depends on a backswing of the user, it is possible to sufficiently determine a swing type of the user simply on the basis of an attitude or a position of the exercise appliance at a predetermined timing during a backswing.

Application Example 2

In the calculation apparatus according to the application example, the information may include information regarding a rotation angle about a rotation axis of a shaft at the predetermined timing with a longitudinal direction of the shaft of the exercise appliance as the rotation axis.

Since it is considered that features of a swing of the user appear in temporal changes of the rotation angle about the shaft axis, it is possible to perform determination with high accuracy on the basis of the rotation angle at a predetermined timing.

Application Example 3

In the calculation apparatus according to the application example, the processing section may perform the determination according to a range in which the rotation angle is included.

It is possible to easily perform determination on the basis of a range in which the rotation angle is included.

Application Example 4

In the calculation apparatus according to the application example, the predetermined timing may include two or more timings.

It is possible to further increase the accuracy of determination on the basis of rotation angles at two or more timings than on the basis of a rotation angle at a single timing.

Application Example 5

In the calculation apparatus according to the application example, the predetermined timing may include at least one of a halfway back timing and a top timing.

Since it is considered that features of a swing of the user appear in a rotation angle at halfway back or at the top, it is possible to reduce an amount of necessary information and also to increase the accuracy of determination on the basis of a rotation angle at at least one of the halfway back and top timings.

Application Example 6

In the calculation apparatus according to the application example, the swing type may be any one of an upper body type, a lower body type, and a whole body type.

Therefore, a swing type of the user can be classified as any one of the upper body type, the lower body type, and the whole body type.

Application Example 7

In the calculation apparatus according to the application example, the information may include information regarding a position of a ball hitting portion of the exercise appliance at the predetermined timing.

Since it is considered that features of a swing of the user appear in a trajectory of the ball hitting portion, it is possible to determine a swing type with high accuracy on the basis of a position of the ball hitting portion at a predetermined timing.

Application Example 8

In the calculation apparatus according to the application example, the processing section may perform the determination according to a region in which the position is included.

It is possible to easily perform determination on the basis of the region. A boundary of the region may be fixed, and may be variable.

Application Example 9

In the calculation apparatus according to the application example, the processing section may set a boundary of the region on the basis of a first virtual plane specified by the longitudinal direction of the shaft of the exercise appliance at the time of starting a swing, and a target hit ball direction.

If a boundary is defined on the basis of the shaft axis direction of the exercise appliance at the time of starting a swing, it is possible to perform determination regardless of a habit of the way of the user holding the exercise appliance or a length of the exercise appliance.

Application Example 10

In the calculation apparatus according to the application example, the processing section may set a boundary of the region on the basis of a second virtual plane specified by the longitudinal direction of the shaft of the exercise appliance at the time of starting a swing, a target hit ball direction, and physical information of a user.

If a boundary is defined on the basis of the physical information of the user, it is possible to perform determination regardless of a physique of the user.

Application Example 11

In the calculation apparatus according to the application example, the second virtual plane may be a plane specified by a direction from a predetermined position between the head and the chest of the user toward a position of the ball hitting portion of the exercise appliance, and the target hit ball direction, at the time of starting the swing.

Therefore, a so-called Hogan plane can be used to define a boundary.

Application Example 12

In the calculation apparatus according to the application example, the predetermined timing may include at least a halfway back timing.

Since it is considered that features of a swing of the user appear in a position of the ball hitting portion at a halfway back timing, it is possible to reduce an amount of necessary information and also to increase the accuracy of determination on the basis of a position of the ball hitting portion at halfway back.

Application Example 13

In the calculation apparatus according to the application example, the swing type may be any one of a lower body type, an upper body type, a first whole body type, a second whole body type, and a third whole body type.
Therefore, a swing type of the user can be classified as any one of the upper body type, the lower body type, and the whole body type.

Application Example 14

In the calculation apparatus according to the application example, the rotation angle is a relative value obtained when the shaft changes from a first state to a second state.

Application Example 15

In the calculation apparatus according to the application example, the first state may be a standing still state before starting a swing action, and the second state may be an action state after starting the swing action.

Application Example 16

In the calculation apparatus according to the application example, the information may be information indicating an average value or an intermediate value of the rotation angle in a predetermined period of time during the backswing.
If the average value or the intermediate value is used, it is possible to prevent the influence which a rotation angle measurement error exerts on a determination result.

Application Example 17

In the calculation apparatus according to the application example, the information may be information indicating an average value or an intermediate value of the position in a predetermined period of time during the backswing.
If the average value or the intermediate value is used, it is possible to prevent the influence which a position measurement error exerts on a determination result.

Application Example 18

In the calculation apparatus according to the application example, the information may be information generated on the basis of an output from an inertial sensor.
It is possible to obtain necessary information in a smaller calculation amount on the basis of the output from the inertial sensor than on the basis of a swing image or the like, and thus high efficiency is ensured.

Application Example 19

A calculation system according to this application example includes a calculation apparatus that includes a processing section performing determination of a swing type on the basis of information regarding an attitude or a position of an exercise appliance at a predetermined timing during a backswing; and an inertial sensor that outputs data which is a basis of the information.
Since it is considered that a tendency for a user to perform a downswing depends on a backswing of the user, it is possible to sufficiently determine a swing type of the user simply on the basis of an attitude or a position of the exercise appliance at a predetermined timing during a backswing.

Application Example 20

A calculation method according to this application example includes performing determination of a swing type on the basis of information regarding an attitude or a position of an exercise appliance at a predetermined timing during a backswing.
Since it is considered that a tendency for a user to perform a downswing depends on a backswing of the user, it is possible to sufficiently determine a swing type of the user simply on the basis of an attitude or a position of the exercise appliance at a predetermined timing during a backswing.

Application Example 21

A calculation program according to this application example causes a computer to execute a determination procedure of performing determination of a swing type on the basis of information regarding an attitude or a position of an exercise appliance at a predetermined timing during a backswing.

Since it is considered that a tendency for a user to perform a downswing depends on a backswing of the user, it is possible to sufficiently determine a swing type of the user simply on the basis of an attitude or a position of the exercise appliance at a predetermined timing during a backswing.

Application Example 22

A recording medium according to this application example stores therein a calculation program causing a computer to execute a determination procedure of performing determination of a swing type on the basis of information regarding an attitude or a position of an exercise appliance at a predetermined timing during a backswing.

Since it is considered that a tendency for a user to perform a downswing depends on a backswing of the user, it is possible to sufficiently determine a swing type of the user simply on the basis of an attitude or a position of the exercise appliance at a predetermined timing during a backswing.

BRIEF DESCRIPTION OF THE DRAWINGS

The invention will be described with reference to the accompanying drawings, wherein like numbers reference like elements.

Fig. 1 is a diagram illustrating a swing diagnosis system.
Fig. 2 is a diagram illustrating examples of a position at which and a direction in which a sensor unit is attached.
Fig. 3 is a diagram illustrating a procedure of actions performed by a user.
Fig. 4 is a diagram illustrating a configuration example of the swing diagnosis system.
Fig. 5 is a diagram illustrating a first determination table.
Fig. 6 is a diagram illustrating a second determination table.
Fig. 7 is a flowchart illustrating examples of procedures of a swing analysis process.
Fig. 8 is a diagram for explaining address (swing starting), halfway back, and top.
Fig. 9 is a flowchart illustrating examples of procedures of a process of detecting swing starting and top.
Fig. 10 is a graph illustrating examples of temporal changes of three-axis angular velocities.
Fig. 11 is a graph illustrating a temporal change of a combined value of the three-axis angular velocities.
Fig. 12 is a graph illustrating a temporal change of a derivative of the combined value.
Fig. 13 is a flowchart illustrating examples of procedures of a process of detecting halfway back.
Fig. 14 is a flowchart illustrating examples of procedures of a process of setting a determination region.
Fig. 15 is a diagram illustrating a shaft plane and a Hogan plane.
Fig. 16 is a diagram illustrating relationships among the shaft plane and the Hogan plane, and regions A, B, C and D.
Fig. 17 is a flowchart illustrating examples of procedures of a process of specifying the shaft plane.
Fig. 18 is a view in which a golf club and a sensor unit are viewed from a negative side of an X axis during standing still of a user.
Fig. 19 is a view in which a sectional view of the shaft plane which is cut in a YZ plane is viewed from the negative side of the X axis.
Fig. 20 is a flowchart illustrating examples of procedures of a process of specifying the Hogan plane.
Fig. 21 is a view in which a sectional view of the Hogan plane which is cut in the YZ plane is viewed from the negative side of the X axis.
Fig. 22 is a diagram illustrating an example of a display screen of a determination result (diagnosis result).
Fig. 23 is a diagram illustrating an example of an input screen.
Fig. 24 is a diagram illustrating an example of an editing screen.
Fig. 25 is a diagram illustrating an example of a swing diagnosis system using a server.
Fig. 26 is a diagram illustrating an example of a head mounted display.

DESCRIPTION OF EXEMPLARY EMBODIMENTS

Hereinafter, preferred embodiments of the invention will be described with reference to the drawings. The embodiments described below are not intended to improperly limit the content of the invention disclosed in the appended claims. In addition, all constituent elements described below are not essential constituent elements of the invention.

1. Swing Diagnosis System

1-1. Outline of swing diagnosis system

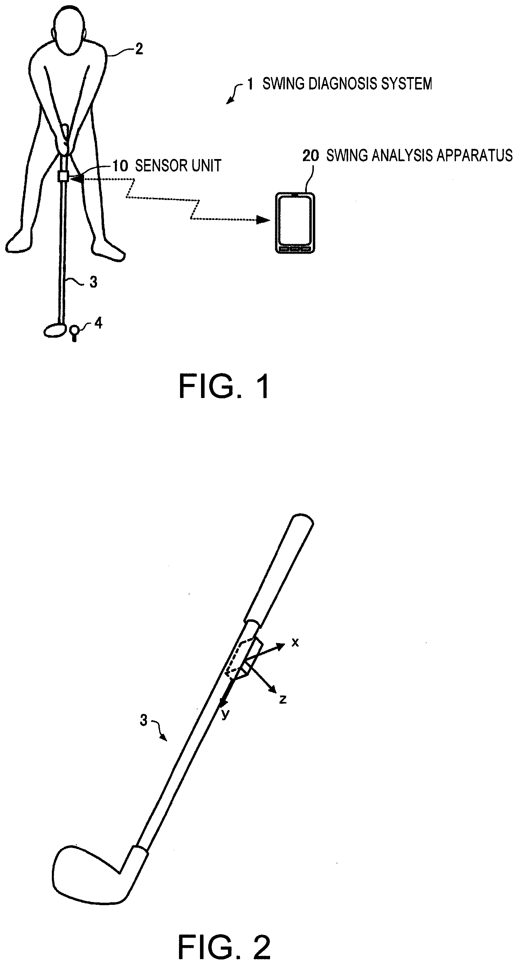

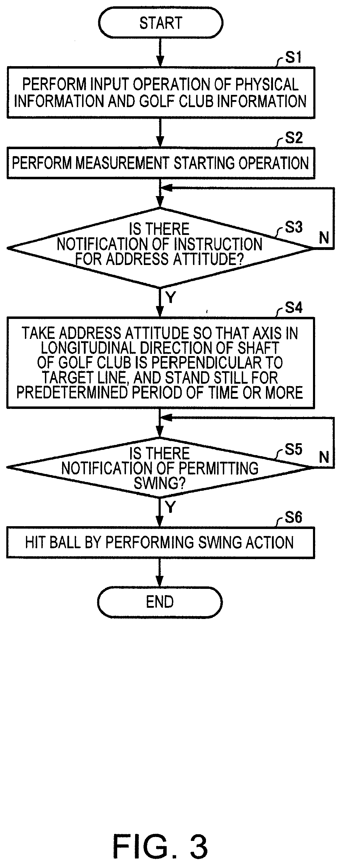

Fig. 1 is a diagram for explaining an outline of a swing diagnosis system (an example of a calculation system) of the present embodiment. A swing diagnosis system 1 of the present embodiment is configured to include a sensor unit 10 (an example of an inertial sensor) and a swing analysis apparatus 20 (an example of a calculation apparatus).
The sensor unit 10 can measure acceleration generated in each axial direction of three axes and angular velocity generated around each of the three axes, and is attached to a golf club 3 (an example of an exercise appliance).
In the present embodiment, as illustrated in Fig. 2, the sensor unit 10 is attached to a part of a shaft of the golf club 3 so that one axis of three detection axes (an x axis, a y axis, and a z axis), for example, the y axis matches a longitudinal direction of the shaft. Preferably, the sensor unit 10 is attached to a position close to a grip to which impact during ball hitting is hardly forwarded and a centrifugal force is not applied during a swing. The shaft is a shaft portion other than a head (an example of a ball hitting portion) of the golf club 3 and also includes the grip. However, the sensor unit 10 may be attached to a part (for example, the hand or a glove) of a user 2, and may be attached to an accessory such as a wristwatch.
The user 2 performs a swing action for hitting a golf ball 4 according to predefined procedures. Fig. 3 is a diagram illustrating procedures of actions performed by the user 2. As illustrated in Fig. 3, first, the user 2 performs an input operation of physical information of the user 2, information (golf club information) regarding the golf club 3 used by the user 2, and the like via the swing analysis apparatus 20 (step S1). The physical information includes at least one of information regarding a height, a length of the arm, and a length of the leg of the user 2, and may further include information regarding a sex or other information. The golf club information includes at least one of information regarding a length (club length) of the golf club 3 and the type (number) of golf club 3. Next, the user 2 performs a measurement starting operation (an operation for starting measurement in the sensor unit 10) via the swing analysis apparatus 20 (step S2). Next, after receiving a notification (for example, a notification using a voice) of giving an instruction for taking an address attitude (a basic attitude before starting exercise) from the swing analysis apparatus 20 (Y in step S3), the user 2 takes an address attitude so that the axis in the longitudinal direction of the shaft of the golf club 3 is perpendicular to a target line (a target direction of a hit ball), and stands still (step S4). Next, the user 2 receives a notification (for example, a notification with a voice) of permitting a swing from the swing analysis apparatus 20 (Y in step S5), and then hits the golf ball 4 by performing a swing action (step S6).
In step S1 in Fig. 3, the user 2 inputs physical information such as a height, a sex, an age, and nationality, and inputs golf club information such as a club length, a number. Information included in the physical information is not limited thereto, and, the physical information may include, for example, at least one of information regarding a length of the arm and a length of the leg instead of or along with the height. Similarly, information included in the golf club information is not limited thereto, and, for example, the golf club information may not include at least one of information regarding the club length and the number, and may include other information.
If the user 2 performs the measurement starting operation in step S2 in Fig. 3, the sensor unit 10 measures three-axis accelerations and three-axis angular velocities in a predetermined cycle (for example, 1 ms), and sequentially transmits the measured data to the swing analysis apparatus 20. Communication between the sensor unit 10 and the swing analysis apparatus 20 may be wireless communication, and may be wired communication. This data indicates a position or an attitude of the sensor unit 10, and further indicates a position or an attitude of each portion of the golf club 3.

1-2. Configuration of swing diagnosis system

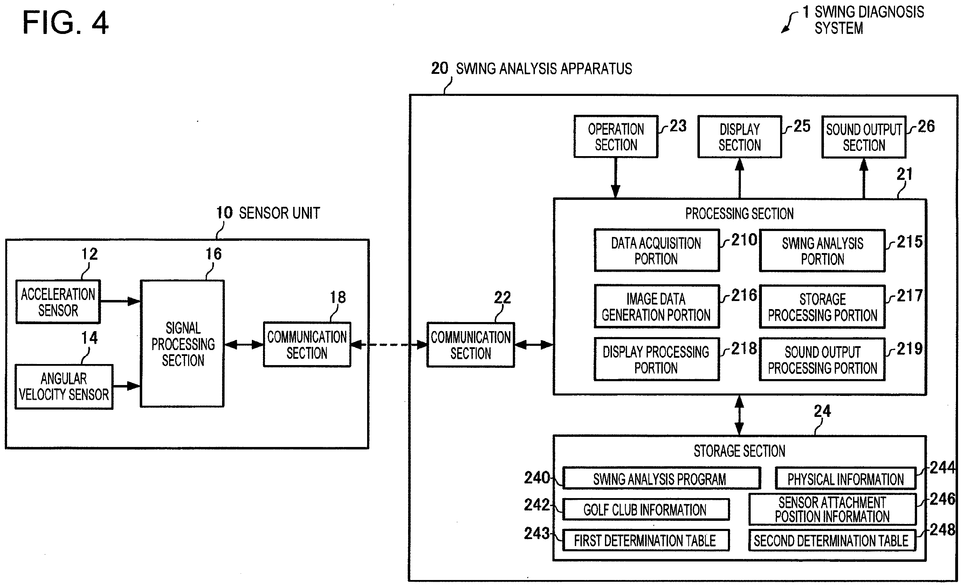

Fig. 4 is a diagram illustrating a configuration example (configuration examples of the sensor unit 10 and the swing analysis apparatus 20) of the swing diagnosis system 1 of the present embodiment. As illustrated in Fig. 4, in the present embodiment, the sensor unit 10 is configured to include an acceleration sensor 12, an angular velocity sensor 14, a signal processing section 16, and a communication section 18.
The acceleration sensor 12 measures respective accelerations in three axial directions which intersect (ideally, orthogonal to) each other, and outputs digital signals (acceleration data) corresponding to magnitudes and directions of the measured three-axis accelerations.
The angular velocity sensor 14 measures respective angular velocities in three axial directions which intersect (ideally, orthogonal to) each other, and outputs digital signals (angular velocity data) corresponding to magnitudes and directions of the measured three-axis angular velocities.

The signal processing section 16 receives the acceleration data and the angular velocity data (measured data) from the acceleration sensor 12 and the angular velocity sensor 14, respectively, adds time information thereto, stores the data in a storage portion (not illustrated), adds time information to the stored measured data (an example of attitude or position information) so as to generate packet data conforming to a communication format, and outputs the packet data to the communication section 18.

Ideally, the acceleration sensor 12 and the angular velocity sensor 14 are provided in the sensor unit 10 so that the three axes thereof match three axes (an x axis, a y axis, and a z axis) of an orthogonal coordinate system (sensor coordinate system) defined for the sensor unit 10, but, actually, errors occur in installation angles. Therefore, the signal processing section 16 performs a process of converting the acceleration data and the angular velocity data into data in the xyz coordinate system by using a correction parameter which is calculated in advance according to the installation angle errors.

The signal processing section 16 may perform a process of correcting the temperatures of the acceleration sensor 12 and the angular velocity sensor 14. The acceleration sensor 12 and the angular velocity sensor 14 may have a temperature correction function.

The acceleration sensor 12 and the angular velocity sensor 14 may output analog signals, and, in this case, the signal processing section 16 may A/D convert an output signal from the acceleration sensor 12 and an output signal from the angular velocity sensor 14 so as to generate measured data (acceleration data and angular velocity data), and may generate communication packet data by using the data.

The communication section 18 performs a process of transmitting packet data received from the signal processing section 16 to the swing analysis apparatus 20, or a process of receiving a control command from the swing analysis apparatus 20 and sending the control command to the signal processing section 16. The signal processing section 16 performs various processes corresponding to control commands.

The swing analysis apparatus 20 is implemented by, for example, an information terminal (client terminal) such as a smart phone or a personal computer, and is configured to include a processing section 21 (an example of a processing section), a communication section 22, an operation section 23, a storage section 24, a display section 25, and a sound output section 26.

The communication section 22 performs a process receiving packet data transmitted from the sensor unit 10 and sending the packet data to the processing section 21, or a process of transmitting a control command from the processing section 21 to the sensor unit 10.

The operation section 23 performs a process of acquiring operation data from the user 2 and sending the operation data to the processing section 21. The operation section 23 may be, for example, a touch panel type display, a button, a key, or a microphone.

The storage section 24 is constituted of, for example, various IC memories such as a read only memory (ROM), a flash ROM, and a random access memory (RAM), or a recording medium such as a hard disk or a memory card.

The storage section 24 stores a program for the processing section 21 performing various calculation processes or a control process, or various programs or data for realizing application functions. Particularly, in the present embodiment, the storage section 24 stores a swing analysis program 240 (an example of a calculation program) which is read by the processing section 21 and executes a swing analysis process (an example of a calculation method). The swing analysis program 240 may be stored in a nonvolatile recording medium (an example of a recording medium) in advance, or the swing analysis program 240 may be received from a server by the processing section 21 via a network, and may be stored in the storage section 24.

The storage section 24 stores golf club information 242, physical information 244, sensor attachment position information 246, a first determination table 243, and a second determination table 248 as information used for the swing analysis process.

The golf club information 242 is information indicating a specification of the golf club 3 used by the user 2. For example, the user 2 may input golf club information of the golf club 3 which is used, by operating the operation section 23, and the input golf club information may be used as the golf club information 242. Alternatively, in step S1 in Fig. 3, the user 2 may sequentially input type numbers of the golf club 3 (alternatively, selects a type number from a type number list) so that specification information (for example, information regarding a length of the shaft, a central position a lie angle, a face angle, and a loft angle) for each type number is stored in the storage section 24 in advance. In this case, specification information of an input type number may be used as the golf club information 242.

The physical information 244 is information indicating a physique (a height of the waist, a height of the neck, a length of the arm, and the like) of the user 2. For example, the user 2 may input physical information by operating the operation section 23, and the input physical information may be used as the physical information 244.

The sensor attachment position information 246 is information indicating an attachment position of the sensor unit 10 in the golf club 3. For example, in step S1 in Fig. 3, the user 2 may input an attachment position of the sensor unit 10 and a distance to the grip of the golf club 3 by operating the operation section 23, and the input distance information may be used as the sensor attachment position information 246. Alternatively, the sensor unit 10 may be attached at a defined predetermined position (for example, a distance of 20 cm from the grip), and thus information regarding the predetermined position may be stored as the sensor attachment position information 246 in advance.

The first determination table 243 is a reference table used to determine a swing type of the user 2. An argument (input) of the first determination table 243 is an attitude of the golf club 3 at a predetermined timing during a backswing, and a function (output) of the first determination table 243 is a swing type. In other words, if an attitude of the golf club 3 at a predetermined timing is input, the first determination table 243 outputs a swing type (determination result) according to a range in which the attitude is included. Here, it is assumed that a rotation angle of the golf club 3 is used as an attitude of the golf club 3.

The rotation angle of the golf club 3 is a rotation angle about a first axis (an example of a rotation axis) of the golf club 3 with the longitudinal direction of the golf club 3 as the rotation axis (first axis), and is expressed by a relative value (relative rotation angle) with a value of a rotation angle at the time of starting a swing (or at address) as a reference. Here, in a case where the user 2 is a right-handed golfer, a right-handed screw tightening direction in which the tip end directs toward the head side of the golf club 3 is a positive direction of a rotation angle of the golf club 3, and, in a case where the user 2 is a left-handed golfer, a left-handed screw tightening direction in which the tip end directs toward the head side of the golf club 3 is a positive direction of a rotation angle of the golf club 3.

Here, the predetermined timing is assumed to be a halfway back timing and a top timing. In this case, arguments (inputs) of the first determination table 243 are a rotation angle $\theta_{HWB}$ at the halfway back timing and a rotation angle $\theta_{TOP}$ at the top timing. In other words, if the rotation angle $\theta_{HWB}$ at the halfway back timing and the rotation angle $\theta_{TOP}$ at the top timing are input, the first determination table 243 outputs a swing type (determination result) according to a range in which a combination of the rotation angles $\theta_{HWB}$ and $\theta_{TOP}$ is included.

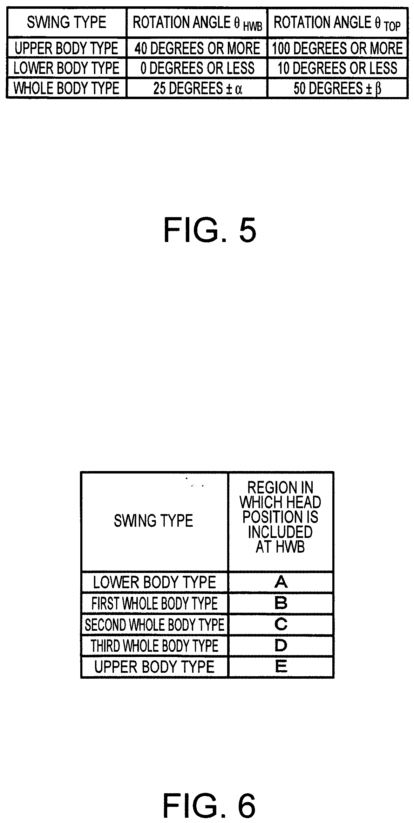

As illustrated in Fig. 5, the first determination table 243 stores three ranges (a range in an upper part of Fig. 5, a range in an intermediate part of Fig. 5, and a range in a lower part of Fig. 5) for combinations of the rotation angles $\theta_{HWB}$ and $\theta_{TOP}$ and swing types ("upper body type", "lower body type", and "whole body type") respectively corresponding to the three ranges.

As illustrated in the upper part of Fig. 5, the range of the relatively large rotation angles $\theta_{HWB}$ and $\theta_{TOP}$ is correlated with the "upper body type". This range is a range of 40 degrees $\leq \theta_{HWB}$ and 100 degrees $\leq \theta_{TOP}$.

As illustrated in the intermediate part of Fig. 5, the range of the relatively small rotation angles $\theta_{HWB}$ and $\theta_{TOP}$ is correlated with the "lower body type". This range is a range of $\theta_{HWB} \leq 0$ degrees and $\theta_{TOP} \leq 10$ degrees.

As illustrated in the lower part of Fig. 5, the range of the intermediate rotation angles $\theta_{HWB}$ and $\theta_{TOP}$ is correlated with the "whole body type". This range is a range of $(25-\alpha)$ degrees $< \theta_{HWB} < (25+\alpha)$ degrees, and $(50-\beta)$ degrees $< \theta_{TOP} < (50+\beta)$ degrees. $\alpha$ is a predetermined value, for example, about 15 degrees, and P is a predetermined value, for example, about 50 degrees.

The "upper body type" is a swing type in which a swing is performed by using the upper body (mainly, the arms or the wrists) more than the lower body, the "lower body type" is a swing type in which a swing is performed by using the lower body more than the upper body (mainly, the arms or the wrists), and the whole body type is a swing type in which a swing is performed by using the upper body (mainly, the arms or the wrists) and the lower body with good balance.

The number of ranges (the number of swing types), the boundary values of the range, and the like illustrated in Fig. 5 are only examples.

Referring to Fig. 4 again, the second determination table 248 is a reference table used to determine a swing type of the user 2. An argument (input) of the second determination table 248 is a position of the golf club 3 at a predetermined timing during a backswing, and a function (output) of the second determination table 248 is a swing type. In other words, if a position of the head of the golf club 3 at a predetermined timing is input, the second determination table 248 outputs a swing type (determination result) according to a region in which the position is included. Here, it is assumed that the predetermined timing is a halfway back timing, and a position of the head of the golf club 3 is used as a position of the golf club 3. In other words, if a position of the head at the halfway back timing is input, the second determination table 248 outputs a swing type (determination result) according to a range (region) in which the position is included.

As illustrated in Fig. 6, the second determination table 248 stores five ranges (regions A to E) for positions of the head, and swing types ("lower body type", "upper body type", "first whole body type" , "second whole body type" , and "third whole body type") respectively corresponding to the five regions A to E.

As illustrated in the uppermost part of Fig. 6, the region A is correlated with the "lower body type". The region A is a region which is closest to the head of the user 2. Details of the region A will be described later.

As illustrated in the lowermost part of Fig. 6, the region E is correlated with the "upper body type". The region E is a region which is closest to the feet of the user 2. Details of the region E will be described later.

As illustrated in the second to fourth parts of Fig. 6, the regions B to D are correlated with the "first whole body type" to the "third whole body type". The regions B to D are regions located between the region A and the region E.

Details of the regions B to D will be described later.

The number of regions (the number of swing types), the interfaces of the regions A to E, and the like illustrated in Fig. 6 may be fixed in advance, and may be set for each swing. Hereinafter, it is assumed that the number of regions (the number of swing types) is fixed in advance, and the interfaces of the regions A to E are set for each swing. Details (determination region setting process) of a method of setting the interfaces will be described later.

Referring to Fig. 4 again, the storage section 24 is used as a work area of the processing section 21, and temporarily stores data which is input from the operation section 23, results of calculation executed by the processing section 21 according to various programs, and the like. The storage section 24 may store data which is required to be preserved for a long period of time among data items generated through processing of the processing section 21.

The display section 25 displays a processing result in the processing section 21 as text, a graph, a table, animation, and other images. The display section 25 may be, for example, a CRT, an LCD, a touch panel type display, and a head mounted display (HMD). A single touch panel type display may realize functions of the operation section 23 and the display section 25.

The sound output section 26 outputs a processing result in the processing section 21 as a sound such as a voice or a buzzer sound. The sound output section 26 may be, for example, a speaker or a buzzer.

The processing section 21 performs a process of transmitting a control command to the sensor unit 10, various computation processes on data which is received from the sensor unit 10 via the communication section 22, and various control processes, according to various programs. By executing the swing analysis program 240, the processing section 21 functions as a data acquisition portion 210, a swing analysis portion 215, an image data generation portion 216, a storage processing portion 217, a display processing portion 218, and a sound output processing portion 219.

The data acquisition portion 210 performs a process of receiving packet data which is received from the sensor unit 10 by the communication section 22, acquiring time information and measured data from the received packet data, and sending the time information and the measured data to the storage processing portion 217.

The swing analysis portion 215 performs a process of analyzing a swing of the user 2 by using the measured data output from the sensor unit 10. Specifically, first, the swing analysis portion 215 computes an offset amount included in the measured data by using the measured data (acceleration data and angular velocity data) during standing still (at address) of the user 2, stored in the storage section 24. Next, the swing analysis portion 215 subtracts the offset amount from the measured data after starting of a swing, stored in the storage section 24, so as to perform bias correction, and computes a position and an attitude of the sensor unit 10 during a swing action of the user 2 (during the action in step S6 in Fig. 3) by using the bias-corrected measured data.

For example, the swing analysis portion 215 computes a position (initial position) of the sensor unit 10 during standing still (at address) of the user 2 in an XYZ coordinate system (global coordinate system) by using acceleration data measured by the acceleration sensor 12, the golf club information 242, and the sensor attachment position information 246, and computes changes in positions from the initial position of the sensor unit 10 in a time series by integrating subsequent acceleration data. The user 2 performs the action in step S4 in Fig. 3, and thus an X coordinate of the initial position of the sensor unit 10 is 0. As illustrated in Fig. 2, since the y axis of the sensor unit 10 matches the longitudinal direction of the shaft of the golf club 3, and the acceleration sensor 12 measures only the gravitational acceleration during standing still of the user 2, the swing analysis portion 215 can compute an inclined angle of the shaft by using y axis acceleration data. The swing analysis portion 215 obtains a distance $L_{SH}$ between the sensor unit 10 and the head on the basis of the golf club information 242 (a length of the shaft), and the sensor attachment position information 246 (a distance from the grip), and sets, as the initial position of the sensor unit 10, a position at the distance $L_{SH}$ from the origin in a negative direction of the y axis of the sensor unit 10, specified by the inclined angle of the shaft when a position of the head is used as the origin (0,0,0).

The swing analysis portion 215 computes an attitude (initial attitude) of the sensor unit 10 during standing still (at address) of the user 2 in the XYZ coordinate system (global coordinate system) by using acceleration data measured by the acceleration sensor 12, and computes changes in attitudes from the initial attitude of the sensor unit 10 by performing rotation calculation using angular velocity data which is subsequently measured by the angular velocity sensor 14. An attitude of the sensor unit 10 may be expressed by, for example, rotation angles (a roll angle, a pitch angle, and a yaw angle) about the X axis, the Y axis, and the Z axis, or a quaternion. Since the acceleration sensor 12 measures only the gravitational acceleration during standing still of the user 2, the swing analysis portion 215 can specify angles respectively formed between the x axis, the y axis, and the z axis of the sensor unit 10, and the gravitational direction, by using three-axis acceleration data. Since the user 2 performs the action in step S4 in Fig. 3, the y axis of the sensor unit 10 is present on a YZ plane during standing still of the user 2, and thus the swing analysis portion 215 can specify the initial attitude of the sensor unit 10.

On the basis of a position of the sensor unit 10 at each time point of a swing, an attitude of the sensor unit 10 at the time point, the golf club information 242, and the sensor attachment position information 246, the swing analysis portion 215 computes a position of the head at the time point.

On the basis of a position of the sensor unit 10 at each time point of a swing, an attitude of the sensor unit 10 at the time point, the golf club information 242, and the sensor attachment position information 246, the swing analysis portion 215 computes a position of the grip at the time point.

The signal processing section 16 of the sensor unit 10 may compute an offset amount of measured data so as to perform bias correction on the measured data, and the acceleration sensor 12 and the angular velocity sensor 14 may have a bias correction function. In this case, it is not necessary for the swing analysis portion 215 to perform bias correction on the measured data.

The swing analysis portion 215 detects specific timings (a swing starting timing, a top timing, and a halfway back timing) during a swing action of the user 2 by using the time information and the measured data stored in the storage section 24. For example, the swing analysis portion 215 computes a combined value of the measured data (acceleration data or angular velocity data) output from the sensor unit 10, and specifies a swing starting and top timings (time points) on the basis of the combined value.

The swing analysis portion 215 specifies a halfway back timing (time point) on the basis of the position of the head and the position of the grip in a period of time (backswing) from the swing starting timing to the top timing.

The swing analysis portion 215 determines a swing type of the user 2 on the basis of at least one of a range in which the rotation angles $\theta_{HWB}$ and $\theta_{TOP}$ at the specific timings (the halfway back timing and the top timing) during the backswing and a region in which the position of the head is included at the specific timing (the halfway back timing) during the backswing, and thus generates determination result information.

The image data generation portion 216 performs a process of generating image data for displaying the determination result information.

The storage processing portion 217 performs a process of receiving the time information and the measured data from the data acquisition portion 210, and storing the time information and the measured data in the storage section 24 in correlation with each other.

The storage processing portion 217 performs read/write processes of various programs or various data for the storage section 24. The storage processing portion 217 performs not only the process of storing the time information and the measured data received from the data acquisition portion 210 in the storage section 24 in correlation with each other, but also a process of storing the determination result information or the like generated by the swing analysis portion 215 in the storage section 24.

The display processing portion 218 performs a process of displaying various images (including text, symbols, and the like in addition to an image corresponding to the image data generated by the image data generation portion 216) on the display section 25. For example, the display processing portion 218 displays an image corresponding to the image data generated by the image data generation portion 216, or text or the like indicating a determination result in the swing analysis portion 215 automatically or in response to an input operation performed by the user 2 after a swing action of the user 2 is completed. Alternatively, a display section may be provided in the sensor unit 10, and the display processing portion 218 may transmit image data to the sensor unit 10 via the communication section 22, and various images, text, or the like may be displayed on the display section of the sensor unit 10.

The sound output processing portion 219 performs a process of outputting various sounds (including voices, buzzer sounds, and the like) from the sound output section 26. For example, the sound output processing portion 219 may read the various pieces of information stored in the storage section 24 automatically or when a predetermined input operation is performed after a swing action of the user 2 is completed, and may output a swing analysis sound or voice from the sound output section 26. Alternatively, a sound output section may be provided in the sensor unit 10, and the sound output processing portion 219 may transmit sound data or voice data to the sensor unit 10 via the communication section 22, and may output various sounds or voices from the sound output section of the sensor unit 10.

A vibration mechanism may be provided in the swing analysis apparatus 20 or the sensor unit 10, and various pieces of information may be converted into vibration information by the vibration mechanism so as to be presented to the user 2.

1-3. Swing analysis process

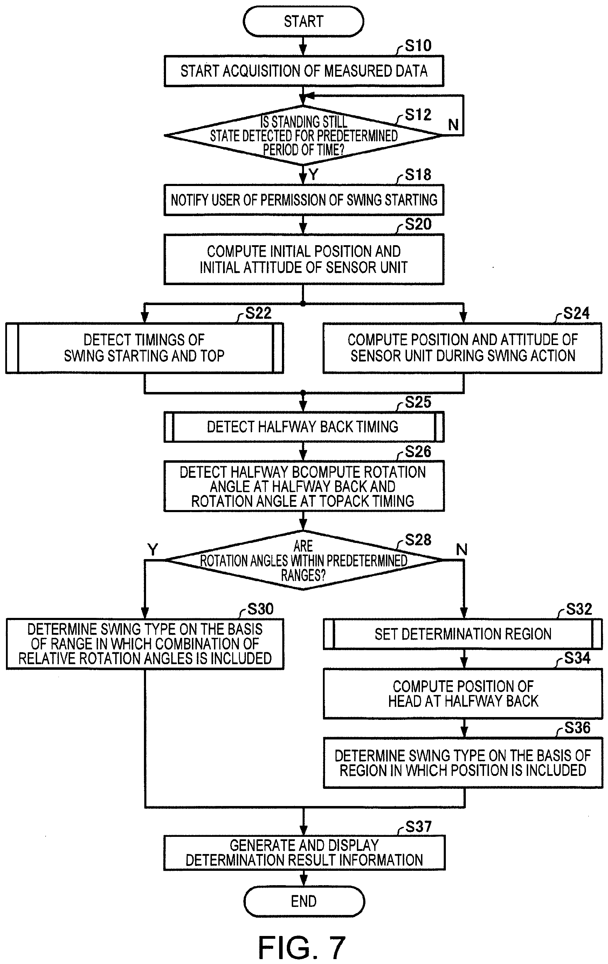

Fig. 7 is a flowchart illustrating procedures of the swing analysis process performed by the processing section 21. The processing section 21 performs the swing analysis process according to the procedures shown in the flowchart of Fig. 7 by executing the swing analysis program 240 stored in the storage section 24. Hereinafter, the flowchart of Fig. 7 will be described.

First, the processing section 21 starts acquisition of measured data from the sensor unit 10 (step S10).

Next, the processing section 21 notifies the user 2 of permission of swing starting (step S18) in a case where a standing still state is continuously detected for a predetermined period of time (Y in step S12) by using the measured data from the sensor unit 10 during a standing still action (address action) of the user 2 (the action in step S4 in Fig. 3), and returns the process in step S12 in a case where the standing still state is not detected (N in step S12). The processing section 21 outputs, for example, a predetermined image or sound, or an LED is provided in the sensor unit 10, and the LED is lighted, so that the user 2 is notified of permission of swing starting. The user 2 confirms the notification and then starts a swing.

Next, the processing section 21 performs processes in step S20 and the substantially steps in real time during the swing action of the user 2 or after the swing is completed.

First, the processing section 21 computes an initial position and an initial attitude of the sensor unit 10 by using the measured data acquired by the sensor unit 10 at address (step S20).

Next, the processing section 21 detects a timing at which the user 2 starts the swing, a top timing, a ball hitting timing (impact timing) by using the measured data acquired from the sensor unit 10 (step S22).

The processing section 21 computes a position and an attitude of the sensor unit 10 during the swing action of the user 2 in parallel to the process in step S22, or before and after the process in step S22 (step S24).

Next, the processing section 21 detects a halfway back timing on the basis of a position of the head and a position of the grip during a backswing (step S25).

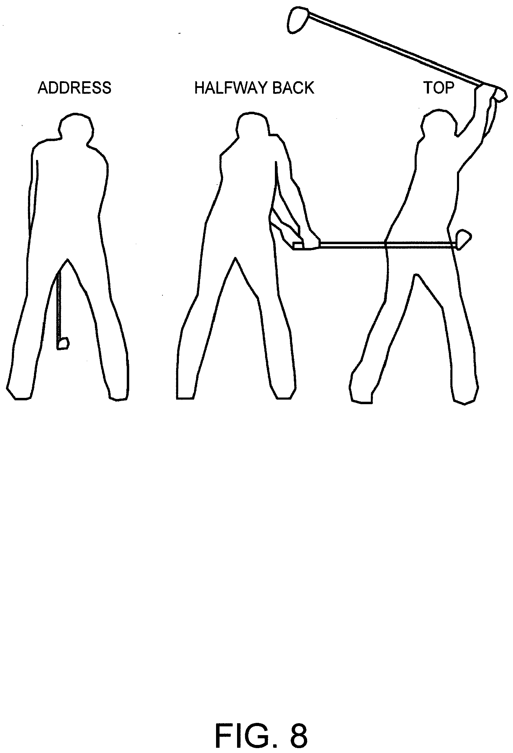

As illustrated in Fig. 8, the halfway back timing is a timing (a timing at which the shaft of the golf club 3 is along the ground surface) at which the axis of the golf club 3 in the longitudinal direction is horizontal in the backswing (a period of time from the swing starting timing to the top timing).

Next, the processing section 21 computes a rotation angle $\theta_{HWB}$ of the golf club 3 at the halfway back timing (a measurement time point $t_b$ of the halfway back) and a rotation angle $\theta_{TOP}$ of the golf club 3 at the top timing (a measurement time point $t_2$ of the top) on the basis of angular velocity data $\omega_y(t)$ about the y axis in the backswing (step S26).

The rotation angle $\theta_{HWB}(t_b)$ of the golf club 3 at the measurement time point $t_b$ of the halfway back may be obtained by time-integrating the angular velocity data $\omega_y(t)$ over an interval from a measurement time point $t_1$ of the swing starting to the measurement time point $t_b$ of the halfway back. However, here, in order to use the time of the swing starting as a reference, a rotation angle at the time of the swing starting is set to zero.

The rotation angle $\theta_{TOP}(t_2)$ of the golf club 3 at the top timing $t_2$ may be obtained by time-integrating the angular velocity data $\omega_y(t)$ over an interval from the measurement time point $t_1$ of the swing starting to the measurement time point $t_2$ of the top.

Next, the processing section 21 determines whether or not a combination of the rotation angle $\theta_{HWB}$ of the golf club 3 at the halfway back and the rotation angle $\theta_{TOP}$ of the golf club 3 at the top is included in the range (any one of the range in the upper part, the range in the intermediate part, and the range in the lower part of Fig. 5) prepared in the first determination table 243 (step S28).

In a case where the combination of the rotation angle $\theta_{HWB}$ of the golf club 3 at the halfway back and the rotation angle $\theta_{TOP}$ of the golf club 3 at the top is included in the range (Y in step S28), the processing section 21 inputs the combination of the rotation angles $\theta_{HWB}$ and $\theta_{TOP}$ to the first determination table 243, determines a swing type output from the first determination table 243 according to the combination as a swing type of the user 2 (step S30), and proceeds to step S37. The procedure in step S30 is an example of a determination procedure.

On the other hand, in a case where the combination of the rotation angle $\theta_{HWB}$ of the golf club 3 at the halfway back and the rotation angle $\theta_{TOP}$ of the golf club 3 at the top is not included in the range (N in step S28), the processing section 21 sets regions A to E in the second determination table 248 (step S32).

Next, the processing section 21 computes a position of the head at the halfway back (step S34). The position of the head at the halfway back may be obtained on the basis of the position of the sensor unit at the measurement time point $t_b$ of the halfway back, the attitude of the sensor unit at the measurement time point $t_b$ of the halfway back, the golf club information 242, and the sensor attachment position information 246.

Next, the processing section 21 inputs the position of the head at the halfway back to the second determination table 248, determines a swing type output from the second determination table 248 according to the position as a swing type of the user 2 (step S36), and proceeds to step S3 7. The procedure in step S36 is an example of a determination procedure.

Next, the processing section 21 generates information (determination result information) indicating the swing type of the user 2, displays the determination result information on the display section 25 (step S37), and finishes the process.

In the flowchart of Fig. 7, order of the respective steps may be changed as appropriate within an allowable range.

1-3-1. Process of detecting swing starting and top

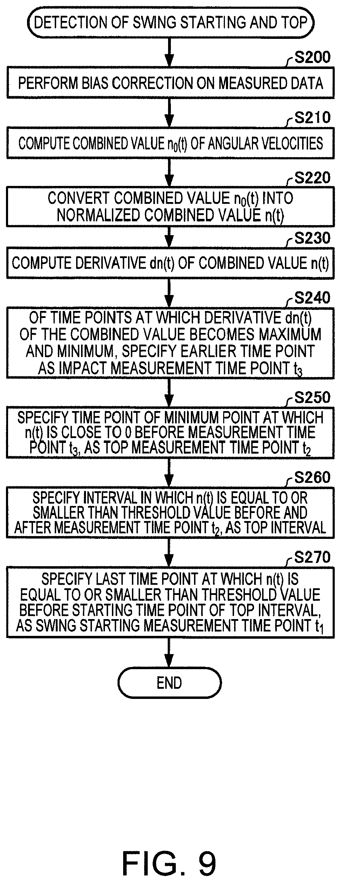

Fig. 9 is a flowchart illustrating examples of procedures of a process (the process in step S22 in Fig. 7) of detecting swing starting and a top. Hereinafter, the flowchart of Fig. 9 will be described.

First, the processing section 21 performs bias correction on the measured data (acceleration data and angular velocity data) stored in the storage section 24 (step S200).

Next, the processing section 21 computes a combined value $n_0(t)$ of angular velocities at each time point t by using the angular velocity data (angular velocity data for each time point t) having undergone the bias correction in step S200 (step S210). For example, if the angular velocity data items at the time point t are respectively indicated by x(t), y(t), and z(t), the combined value $n_0(t)$ of the angular velocities is computed according to the following Eauation (1).

$$n_0(t) = \sqrt{x(t)^2 + y(t)^2 + z(t)^2} \cdots (1)$$

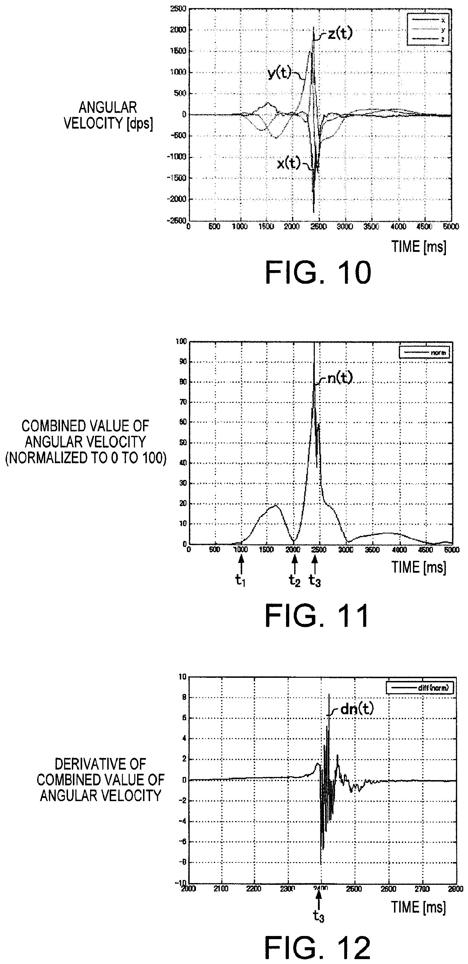

Fig. 10 illustrates examples of three-axis angular velocity data items x(t), y(t) and z(t) obtained when the user 2 hits the golf ball 4 by performing a swing. In Fig. 10, a transverse axis expresses time (msec), and a longitudinal axis expresses angular velocity (dps).

Next, the processing section 21 converts the combined value $n_0(t)$ of the angular velocities at each time point t into a combined value n(t) which is normalized (scale-conversion) within a predetermined range (step S220). For example, if the maximum value of the combined value of the angular velocities in an acquisition period of measured data is max($n_0$), the combined value $n_0(t)$ of the angular velocities is converted into the combined value n(t) which is normalized within a range of 0 to

$$n(t) = \frac{100 \times n_0(t)}{max(n_0)} \cdots (2)$$

Fig. 11 is a diagram in which the combined value $n_0(t)$ of the three-axis angular velocities is computed according to Equation (1) by using the three-axis angular velocity data items x(t), y(t) and z(t) in Fig. 10, and then the combined value n(t) normalized to 0 to 100 according to Equation (2) is displayed in a graph. In Fig. 11, a transverse axis expresses time (msec), and a longitudinal axis expresses a combined value of the angular velocity.

Next, the processing section 21 computes a derivative dn(t) of the normalized combined value n(t) at each time point t (step S230). For example, if a cycle for measuring three-axis angular velocity data items is indicated by $\Delta t$, the derivative (difference) dn (t) of the combined value of the angular velocities at the time point t is calculated by using the following Equation (3).

$$dn(t) = n(t) - n(t - \Delta t) \cdots (3)$$

Fig. 12 is a diagram in which the derivative dn(t) is calculated according to Equation (3) on the basis of the combined value n(t) of the three-axis angular velocities in Fig. 11, and is displayed in a graph. In Fig. 12, a transverse axis expresses time (msec), and a longitudinal axis expresses a derivative value of the combined value of the three-axis angular velocities. In Figs. 10 and 11, the transverse axis is displayed at 0 seconds to 5 seconds, but, in Fig. 12, the transverse axis is display at 2 seconds to 2.8 seconds so that changes in the derivative value before and after impact can be understood.

Next, of time points at which a value of the derivative dn(t) of the combined value becomes the maximum and the minimum, the processing section 21 specifies the earlier time point as an impact measurement time point $t_3$ (step S240) (refer to Fig. 12). It is considered that a swing speed is the maximum at the moment of impact in a typical golf swing. In addition, since it is considered that a value of the combined value of the angular velocities also changes according to a swing speed, a timing at which a derivative value of the combined value of the angular velocities is the maximum or the minimum (that is, a timing at which the derivative value of the combined value of the angular velocities is a positive maximum value or a negative minimum value) in a series of swing actions can be captured as a timing of impact. Since the golf club 3 vibrates due to the impact, a timing at which a derivative value of the combined value of the angular velocities is the maximum and a timing at which a derivative value of the combined value of the angular velocities is the minimum may occur in pairs, and, of the two timings, the earlier timing may be the moment of the impact.

Next, the processing section 21 specifies a time point of a minimum point at which the combined value n(t) is close to 0 before the measurement time point $t_3$ of the impact, as a measurement time point $t_2$ of the top (step S250) (refer to Fig. 11). It is considered that, in a typical golf swing, an action temporarily stops at the top after starting the swing, then a swing speed increases, and finally impact occurs. Therefore, a timing at which the combined value of the angular velocities is close to 0 and becomes the minimum before the impact timing may be captured as the top timing.

Next, the processing section 21 specifies an interval in which the combined value n(t) is equal to or smaller than a predetermined threshold value before and after the measurement time point $t_2$ of the top, as a top interval (step S260). It is considered that, since an action temporarily stops at the top in a typical golf swing, a swing speed is reduced before and after the top. Therefore, an interval, including the top timing, in which the combined value of the angular velocities is continuously equal to or smaller than a predetermined threshold value may be recognized as the top interval.

Next, the processing section 21 specifies a last time point at which the combined value n(t) is equal to or smaller than the predetermined threshold value before a starting time point of the top interval, as a measurement time point $t_1$ of the swing starting (step S270) (refer to Fig. 11), and finishes the process. It is hardly considered that, in a typical golf swing, a swing action is started from a standing still state, and the swing action is stopped at the top. Therefore, the last timing at which the combined value of the angular velocities is equal to or smaller than the predetermined threshold value before the top timing may be captured as a timing of starting the swing action. The time point of the minimum point at which the combined value n(t) is close to 0 before the time point $t_2$ of the top may be specified as a measurement time point of the swing starting.

In the flowchart of Fig. 9, order of the respective steps may be changed as appropriate within an allowable range. In the flowchart of Fig. 9, the processing section 21 specifies impact or the like by using the three-axis angular velocity data, but may specify impact or the like by using three-axis acceleration data in the same manner.

In the flowchart of Fig. 9, the processing section 21 detects a timing (impact) at which the user 2 has hit a ball by using the square root of the square sum as shown in Equation (1) as a combined value of three-axis angular velocities measured by the sensor unit, but, as a combined value of three-axis angular velocities, for example, a square sum of three-axis angular velocities, a sum or an average of three-axis angular velocities, or the product of three-axis angular velocities may be used. Instead of a combined value of three-axis angular velocities, a combined value of three-axis accelerations such as a square sum or a square root of three-axis accelerations, a sum or an average value of three-axis accelerations, or the product of three-axis accelerations may be used.

1-3-2. Halfway back detection process

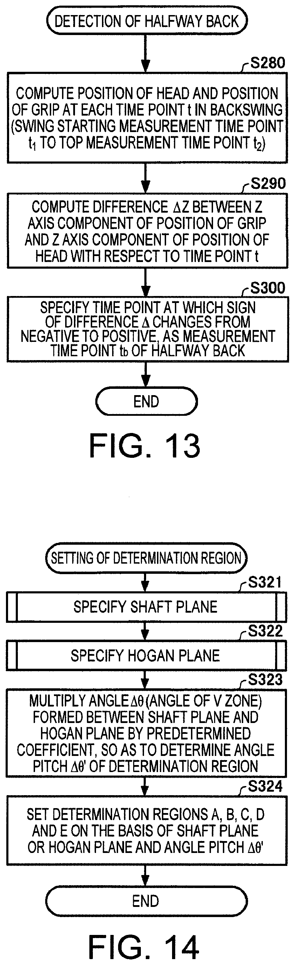

Fig. 13 is a flowchart illustrating examples of procedures of a halfway back detection process (the process in step S25 in Fig. 7). Hereinafter, the flowchart of Fig. 13 will be described.

First, the processing section 21 computes a position of the head and a position of the grip at each time point in the backswing on the basis of the position and the attitude of the sensor unit 10 at each time point in a period of time (backswing) from the measurement time point $t_1$ of the swing starting to the measurement time point $t_2$ of the top, the golf club information 242, and the sensor attachment position information 246 (step S280).

Next, the processing section 21 computes a difference $\Delta Z(t)$ between a Z coordinate component $Z_G(t)$ of the position of the grip at a time point t and a Z coordinate component $Z_H(t)$ of the position of the head at the same time point t, with respect to each time point t in the backswing (step S290). The difference $\Delta Z(t)$ at the time point t is expressed by an equation of $\Delta Z(t)=Z_G(t)-Z_H(t)$.

Next, the processing section 21 specifies a time point at which a sign of the difference $\Delta Z(t)$ during the backswing changes from negative to positive, as the measurement time point $t_b$ of the halfway back (step S300), and finishes the process.

1-3-3. Process of setting determination region

Fig. 14 is a flowchart illustrating examples of procedures of a process (the process in step S32 of Fig. 7) of setting a determination region. Hereinafter, the flowchart of Fig. 14 will be described.

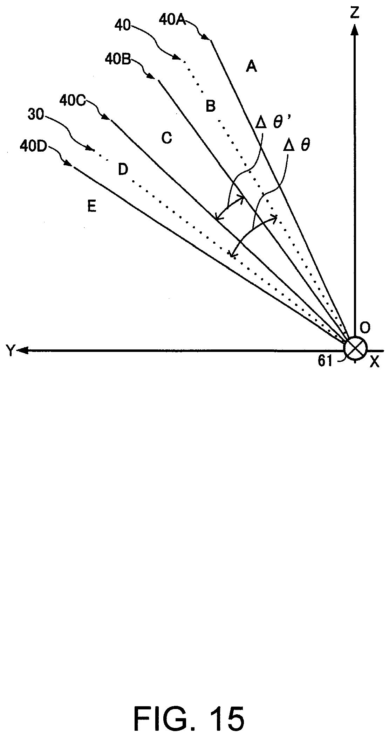

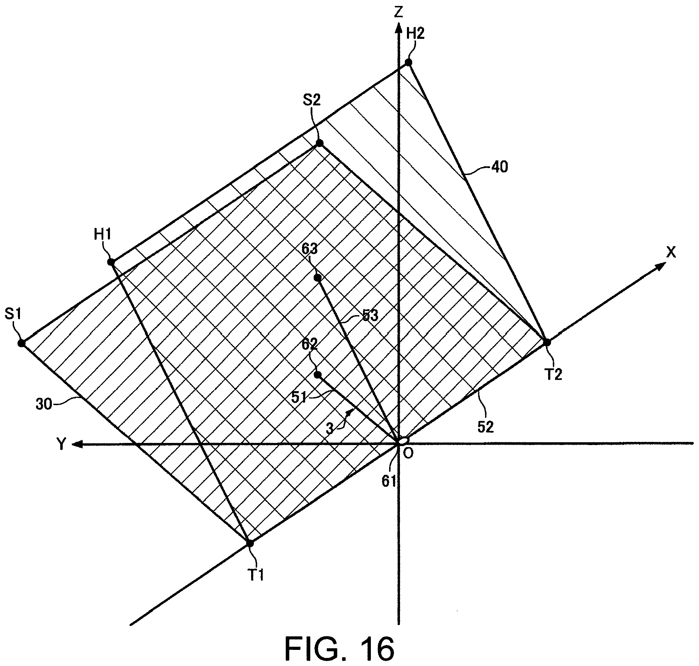

First, the processing section 21 performs a process of specifying a shaft plane (an example of a first virtual plane) (step S321). When a line segment obtained by cutting the shaft plane in the YZ plane is viewed from a negative side of the X axis, the line segment is as indicated by the reference numeral 30 in Figs. 15 and 16. A coordinate system illustrated in Figs. 15 and 16 is an XYZ coordinate system (global coordinate system) which has a target line indicating a target direction of a hit ball as an X axis, an axis on a horizontal plane which is perpendicular to the X axis as a Y axis, and a vertically upward direction (a direction opposite to the gravitational acceleration direction) as a Z axis. The process of specifying the shaft plane 30 will be described later in detail.

First, the processing section 21 performs a process of specifying a Hogan plane (an example of a second virtual plane) (step S322). When a line segment obtained by cutting the Hogan plane in the YZ plane is viewed from a negative side of the X axis, the line segment is as indicated by the reference numeral 40 in Figs. 15 and 16. The process of specifying the Hogan plane 40 will be described later in detail.

Next, the processing section 21 computes an angle $\Delta\theta$ (acute angle) formed between the shaft plane 30 and the Hogan plane 40 on the YZ plane, and determines an angle pitch $\Delta\theta'$ of each of the determination regions A to E by multiplying the angle $\Delta\theta$ by a predetermined coefficient (for example, "1/2") (step S323). Here, a region interposed between the shaft plane 30 and the Hogan plane 40 is a so-called V zone, and the angle $\Delta\theta$ indicates an open angle of the V zone. Therefore, as the open angle $\Delta\theta$ of the V zone increases, the angle pitches $\Delta\theta'$ of the determination regions A to E also increase.

Next, the processing section 21 sets interfaces 40A to 40D of the regions A to E on the basis of the shaft plane 30 or the Hogan plane 40 and the angle pitch $\Delta\theta'$ (step S324), and finishes the process. Consequently, setting of the regions A to E is completed.

As illustrated in Fig. 15, the interface 40A is an interface between the region A and the region B, the interface 40B is an interface between the region B and the region C, the interface 40C is an interface between the region C and the region D, and the interface 40D is an interface between the region D and the region E. Above all, the region B between the interface 40A and the interface 40B is the Hogan plane 40 and a peripheral region thereof, and the region D between the interface 40C and the interface 40D is the shaft plane 30 and a peripheral region thereof.

Meanwhile, the interface 40A is a plane obtained by rotating the Hogan plane 40 by an angle of $+\Delta\theta'/2$ about the X axis (or a plane obtained by rotating the shaft plane 30 by $+5\Delta\theta'/2$ about the X axis). Here, when viewed from the negative side of the X axis, a clockwise direction is assumed to be a positive direction of an angle about the X axis.

The interface 40B is a plane obtained by rotating the Hogan plane 40 by an angle of $-\Delta\theta'/2$ about the X axis (or a plane obtained by rotating the shaft plane 30 by an angle of $+3\Delta\theta'/2$ about the X axis).

The interface 40C is a plane obtained by rotating the Hogan plane 40 by an angle of $-3\Delta\theta'/2$ about the X axis (or a plane obtained by rotating the shaft plane 30 by an angle of $+\Delta\theta'/2$ about the X axis).

The interface 40D is a plane obtained by rotating the Hogan plane 40 by an angle of $-5\Delta\theta'/2$ about the X axis (or a plane obtained by rotating the shaft plane 30 by an angle of $-\Delta\theta'/2$ about the X axis).

1-3-4. Outline of shaft plane and Hogan plane

Fig. 16 is a diagram illustrating a shaft plane and a Hogan plane at address of the user 2. Here, the XYZ coordinate system (global coordinate system) is defined which has a target line indicating a target direction of a hit ball as the X axis, an axis on a horizontal plane which is perpendicular to the X axis as the Y axis, and a vertically upward direction (a direction opposite to the gravitational acceleration direction) as the Z axis. Fig. 16 displays the X axis, the Y axis, and the Z axis.

As illustrated in Fig. 16, the shaft plane 30 at address of the user 2 is a virtual plane including a first axis 51 in the longitudinal direction of the shaft of the golf club 3, and a third axis 52 indicating a target direction of a hit ball. In Fig. 16, the origin O (0,0,0) of the XYZ coordinate system is set at a position 61 of the head (ball hitting portion) of the golf club 3 at address.

The Hogan plane 40 is a virtual plane including the third axis 52 and a second axis 53. The second axis 53 is an axis passing through a predetermined position 63 (for example, a position of the base of the neck, or a position of one of left and right shoulders) on a line segment connecting both of the shoulders of the user 2 to each other, and a position 62 (an example of a ball hitting position) of the head (ball hitting portion) of the golf club 3. However, the second axis 53 may be an axis passing through the predetermined position 63 and a position (an example of a ball hitting position) of the golf ball 4.

1-3-5. Shaft plane specifying process

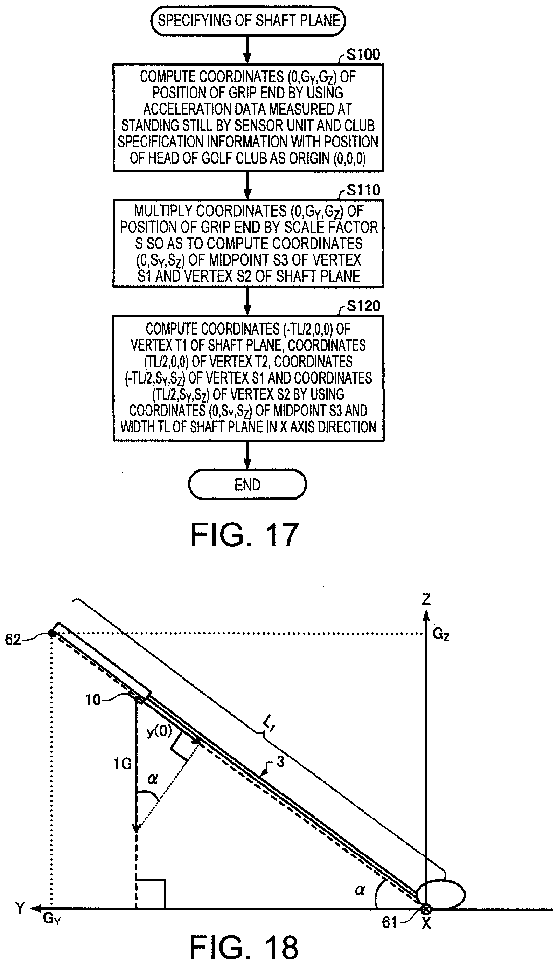

Fig. 17 is a flowchart illustrating examples of procedures of a process (the process in step S321 in Fig. 14) of specifying the shaft plane (first virtual plane) performed by the processing section 21. Hereinafter, the flowchart of Fig. 17 will be described.

First, as illustrated in Fig. 18, the processing section 21 computes coordinates $(0, G_Y, G_Z)$ of a position 62 of a grip end by using acceleration data measured at address by the sensor unit 10 and the golf club information 242 with the position 61 of the head of the golf club 3 as the origin O (0,0,0) of the XYZ coordinate system (global coordinate system) (step S100). Fig. 18 is a plan view in which the golf club 3 and the sensor unit 10 during standing still (at address) of the user 2 are viewed from the negative side of the X axis, the origin O (0,0,0) is set at the position 61 of the head of the golf club 3, and coordinates of the position 62 of the grip end are $(0, G_Y, G_Z)$. As illustrated in Fig. 18, the gravitational acceleration G is applied to the sensor unit 10 during standing still of the user 2, and thus a relationship between a y axis acceleration y(0) and an inclined angle (an angle formed between the axis of the shaft in the longitudinal direction and the horizontal plane (XY plane)) $\alpha$ of the shaft of the golf club 3 is expressed by Equation (4).

$$y(0) = G \cdot \sin\alpha \cdots (4)$$

Therefore, if a length of the shaft of the golf club 3 included in the golf club information 242 is indicated by $L_1$, $G_Y$ and $G_Z$ are respectively computed by using the length $L_1$ of the shaft and the inclined angle $\alpha$ according to Equations (5) and (6).

$$G_Y = L_1 \cdot \cos \alpha \cdots (5)$$

$$G_Z = L_1 \cdot \sin \alpha \cdots (6)$$

Next, the processing section 21 multiplies the coordinates $(0,G_Y,G_Z)$ of a position 62 of the grip end of the golf club 3 by a scale factor S so as to compute coordinates $(0,S_Y,S_Z)$ of a midpoint S3 of a vertex S1 and a vertex S2 of the shaft plane 30 (step S110). In other words, $S_Y$ and $S_Z$ are respectively computed according to Equations (7) and (8).

$$S_Y = G_Y \cdot S \cdots (7)$$

$$S_Z = G_Z \cdot S \cdots (8)$$

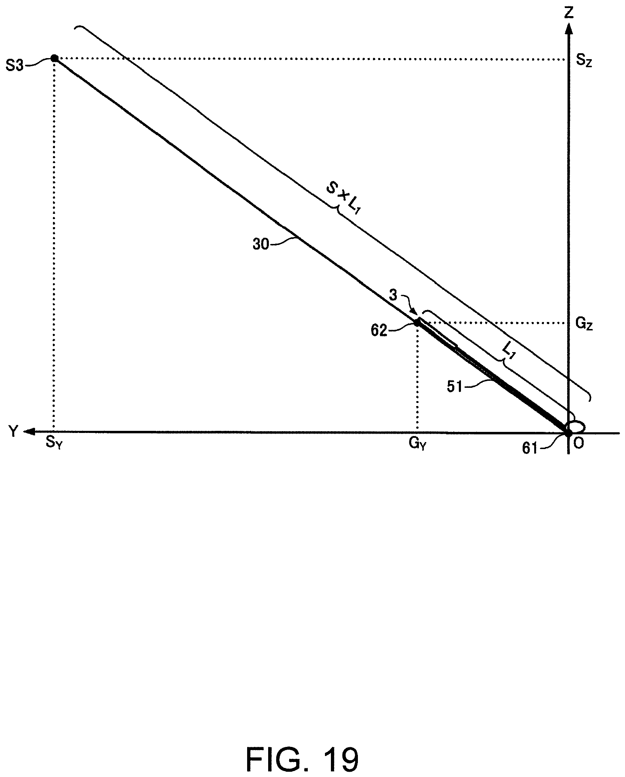

Fig. i9 is a view in which a sectional view of the shaft plane 30 in Fig. 18 which is cut in the YZ plane is viewed from the negative side of the X axis. As illustrated in Fig. 19, a length (a width of the shaft plane 30 in a direction orthogonal to the X axis) of a line segment connecting the midpoint S3 of the vertex S1 and the vertex S2 to the origin O is S times the length $L_1$ of the first line segment 51. The scale factor S is set to a value at which a trajectory of the golf club 3 during a swing action of the user 2 enters the shaft plane 30. For example, if a length of the arm of the user 2 is indicated by $L_2$, the scale factor S may be set as in Equation (9) so that the width $S \times L_1$ of the shaft plane 30 in the direction orthogonal to the X axis is twice the sum of the length $L_1$ of the shaft and the length $L_2$ of the arm.

$$S = \frac{2 \cdot (L_1 + L_2)}{L_1} \cdots (9)$$

The length $L_2$ of the arm of the user 2 is associated with a height $L_0$ of the user 2. The length $L_2$ of the arm is expressed by a correlation expression such as Equation (10) in a case where the user 2 is a male, and is expressed by a correlation expression such as Equation (11) in a case where the user 2 is a female, on the basis of statistical information.

$$L_2 = 0.41 \times L_0 - 45.5 [mm] \cdots (10)$$

$$L_2 = 0.46 \times L_0 - 126.9 [mm] \cdots (11)$$

Therefore, the length $L_2$ of the arm of the user is calculated according to Equation (10) or Equation (11) by using the height $L_0$ and a sex of the user 2 included in the physical information 244.
Next, the processing section 21 computes coordinates $(-TL/2,0,0)$ of a vertex T1 of the shaft plane 30, coordinates $(TL/2,0,0)$ of a vertex T2 , coordinates $(-TL/2,S_Y,S_Z)$ of the vertex S1, and coordinates $(TL/2,S_Y,S_Z)$ of the vertex S2 by using the coordinates $(0,S_Y,S_Z)$ of the midpoint S3 and a width (the length of the third line segment 52) TL of the shaft plane 30 in the X axis direction (step S120). The width TL in the X axis direction is set to a value at which a trajectory of the golf club 3 during a swing action of the user 2 enters the shaft plane 30. For example, the width TL in the X axis direction may be set to be the same as the width $S \times L_1$ in the direction orthogonal to the X axis, that is, twice the sum of the length $L_1$ of the shaft and the length $L_2$ of the arm.
The shaft plane 30 is specified on the basis of the coordinates of the four vertices T1, T2, S1 and S2, computed in the above-described way.

1-3-6. Hogan plane specifying process

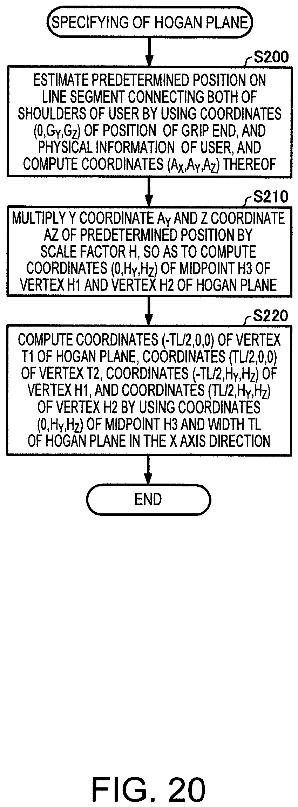

Fig. 20 is a flowchart illustrating examples of procedures of a process (the process in step S322 in Fig. 14) of specifying a Hogan plane (second virtual plane) performed by the processing section 21. Hereinafter, the flowchart of Fig. 20 will be described.
First, the processing section 21 estimates the predetermined position 63 on the line segment connecting both of the shoulders of the user 2 by using the coordinates $(0,G_Y,G_Z)$ of the position 62 of the grip end of the golf club 3, and the physical information 244 of the user 2, and computes coordinates $(A_X, A_Y, A_Z)$ thereof (step S200).

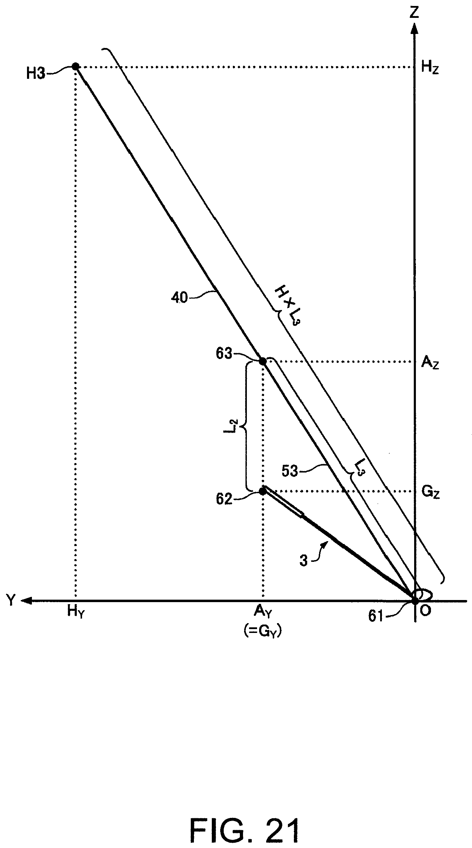

Fig. 21 is a view in which a sectional view of the Hogan plane 40 which is cut in the YZ plane is viewed from the negative side of the X axis. In Fig. 21, a midpoint of the line segment connecting both of the shoulders of the user 2 is the predetermined position 63, and the predetermined position 63 is present on the YZ plane. Therefore, an X coordinate $A_X$ of the predetermined position 63 is 0. As illustrated in Fig. 21, the processing section 21 estimates, as the predetermined position 63, a position obtained by moving the position 62 of the grip end of the golf club 3 by the length $L_2$ of the arm of the user 2 in a positive direction along the Z axis. Therefore, a Y coordinate $A_Y$ of the predetermined position 63 is the same as the Y coordinate $G_Y$ of the position 62 of the grip end, and a Z coordinate $A_Z$ of the predetermined position 63 is computed as a sum of the Z coordinate $G_Z$ of the position 62 of the grip end and the length $L_2$ of the arm of the user 2 as in Equation (12).

$$A_Z = G_Z + L_2 \cdots (12)$$

The length $L_2$ of the arm of the user 2 is calculated according to Equation (7) or (8) by using the height $L_0$ and a sex of the user 2 included in the physical information 244.

Next, the processing section 21 multiplies the Y coordinate $A_Y$ and the Z coordinate $A_Z$ of the predetermined position 63 by a scale factor H, so as to compute coordinates $(0, H_Y, H_Z)$ of a midpoint H3 of a vertex H1 and a vertex H2 of the Hogan plane 40 (step S210). In other words, $H_Y$ and $H_Z$ are respectively computed according to Eauation (13) and Eauation (14).

$$H_Y = A_Y \cdot H \cdots (13)$$

$$H_Z = A_Z \cdot H \cdots (14)$$

As illustrated in Fig. 21, a length (a width of the Hogan plane 40 in a direction orthogonal to the X axis) of a line segment connecting the midpoint H3 of the vertex H1 and the vertex H2 to the origin O is H times the length $L_3$ of the second line segment 53. The scale factor H is set to a value at which a trajectory of the golf club 3 during a swing action of the user 2 enters the Hogan plane 40. For example, the Hogan plane 40 may have the same shape and size as the shape and the size of the shaft plane 30. In this case, since the width $H \times L_3$ of the Hogan plane 40 in the direction orthogonal to the X axis matches the width $S \times L_1$ of the shaft plane 30 in the direction orthogonal to the X axis, and is twice the sum of the length $L_1$ of the shaft of the golf club 3 and the length $L_2$ of the arm of the user 2, the scale factor H may be

$$H = \frac{2 \cdot (L_1 + L_2)}{L_3} \cdots (15)$$

The length $L_3$ of the second line segment 53 is computed according to Equation (16) by using the Y coordinate $A_Y$ and the

$$L_3 = \sqrt{A_Y{}^2 + A_Z{}^2} \cdots (16)$$

Next, the processing section 21 computes coordinates (-TL/2,0,0) of a vertex T1 of the Hogan plane 40, coordinates (TL/2,0,0) of a vertex T2, coordinates (-TL/2, $H_Y$, $H_Z$) of the vertex H1, and coordinates (TL/2, $H_Y$, $H_Z$) of the vertex H2 by using the coordinates $(0, H_Y, H_Z)$ of the midpoint H3 and a width (the length of the third line segment 52) TL of the Hogan plane 40 in the X axis direction (step S220). The width TL in the X axis direction is set to a value at which a trajectory of the golf club 3 during a swing action of the user 2 enters the Hogan plane 40. In the present embodiment, the width TL of the Hogan plane 40 in the X axis direction is the same as the width of the shaft plane 30 in the X axis direction, and may thus be set to be twice the sum of the length $L_1$ of the shaft and the length $L_2$ of the arm, as described above.

The Hogan plane 40 is specified on the basis of the coordinates of the four vertices T1, T2, H1 and H2, computed in the above-described way.

1-4. Display screen of determination result

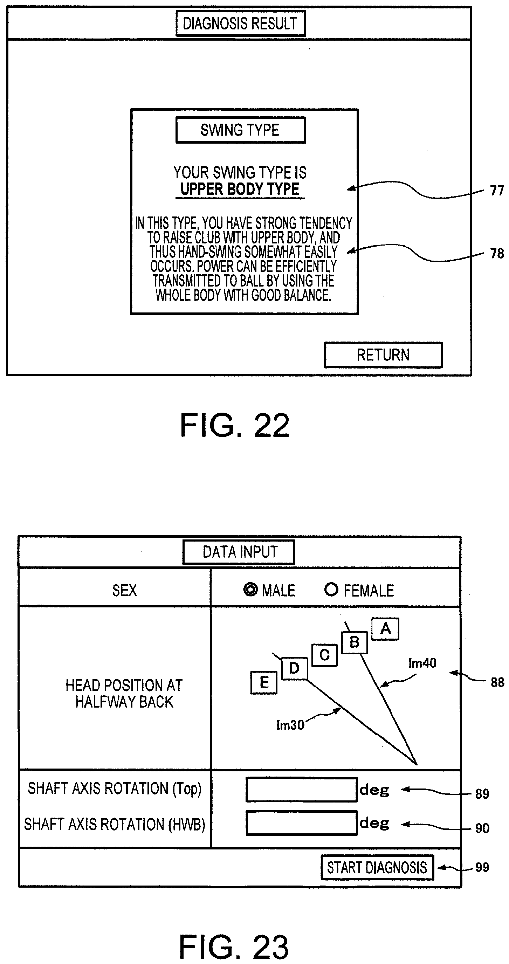

Fig. 22 is a diagram illustrating an example of a display screen of a determination result (diagnosis result) displayed on the display section 25.

As illustrated in Fig. 22, a text image 77 indicating a swing type of the user 2, and a text image 78 indicating advice (practice method or the like) suitable for the swing type of the user 2 are displayed on the display screen of a determination result (diagnosis result). In the example illustrated in Fig. 22, a case is shown in which a swing type of the user is determined as being the "upper body type". In this case, a text image "upper body type" indicating that a swing type of the user 2 is an upper body type is displayed as the text image 77. In addition, in this case, a text image indicating advice information suitable for the upper body type is displayed as the text image 78.

As indicated by the reference numeral 78 in Fig. 22, the advice information suitable for the upper body type includes, for example, information for specifically explaining the upper body type, and information for causing a swing of the upper body type approach a swing of the whole body type. The information for explaining the upper body type includes, for example, information such as the content that "you have a strong tendency to raise the club, and thus hand-swing somewhat easily occurs". The information for causing a swing of the upper body type to approach a swing of the whole body type includes, for example, information such as the content that "power can be efficiently transmitted to a ball by using the whole body with good balance; for this, further note a backswing in which the upper body and the lower body are synchronized with each other; and draw an image of first moving the right shoulder at starting of the backswing, and successively perform a swing of moving the arms, the club, and the lower body".

The advice information is stored in the storage section 24 in advance for each swing type, for example. For example, when a determination result (diagnosis result) is displayed, the processing section 21 reads advice information suitable for a swing type of the user 2 from the storage section 24, and displays the text image 78 indicating the advice information on the display section 25 along with the text image 77 indicating the swing type.

2. Modification Examples

2-1. Modification example of interface

In the above description, the processing section 21 uses the physical information of the user 2 when the Hogan plane 40 is specified on the basis of the shaft plane 30, but may not use the physical information. For example, a plane obtained by rotating the shaft plane 30 by a predetermined angle (for example, +30 degrees) around the X axis may be used as the Hogan plane 40.

The processing section 21 sets the interfaces 40A to 40D of the determination regions A to E (that is, the interfaces 40A to 40D are variable) on the basis of the shaft plane 30 specified by using an attitude of the golf club at address, but may set predetermined planes fixed to XYZ coordinates as the interfaces 40A to 40D (that is, the interfaces 40A to 40D may be fixed). However, also in this case, preferably, each of the interfaces 40A to 40D is a rotational symmetric plane with respect to the X axis, and the angle pitches $\Delta\theta'$ of the interfaces 40A to 40D are uniformly set.

In the above-described swing analysis apparatus 20, the number of determination regions (a total number of regions A to E) is "five", but may be "six or greater", and may be "four or smaller". As the number of determination regions increases, the number of swing types which can be determined also increases.

2-2. Data input screen

In the above-described swing analysis apparatus 20, used to determine a swing type is acquired from the sensor unit 10, but the user 2 may manually input (manual input) the data.

When the user 2 manually inputs the data, the processing section 21 of the swing analysis apparatus 20 may display, for example, a data input screen as illustrated in Fig. 23 on the display section 25.

As illustrated in Fig. 23, for example, a region selection screen 88 for designating to which one of regions A, B, C, D and E a position of the head at halfway back belongs is disposed on the data input screen.

The region selection screen 88 displays a line segment image Im30 indicating a shaft plane, a line segment image Im40 indicating a Hogan plane, and marks ("A", "B", "C", "D", and "E") indicating rough positions of the regions A, B, C, D and E. If the user 2 designates one of the marks A, B, C, D and E (for example, the user taps the marks), a designated mark is highlighted.

For example, a numerical value input screen 89 for inputting a value of a rotation angle $\theta_{TOP}$ (shaft axis rotation (Top)) of the golf club 3 at top is disposed on the data input screen. The user 2 may directly input any numerical value to the numerical value input screen 89.

For example, a numerical value input screen 90 for inputting a value of a rotation angle $\theta_{HWB}$ (shaft axis rotation (HWB)) of the golf club 3 at halfway back is disposed on the data input screen. The user 2 may directly input any numerical value to the numerical value input screen 90.

A button image (diagnosis starting button) 99 or the like for the user 2 notifying the swing analysis apparatus 20 of information indicating that input is completed and an instruction for starting determination (an instruction for starting diagnosis) is displayed on the data input screen. The user 2 may press (tap) the diagnosis starting button 99 so as to cause the swing analysis apparatus 20 to start determination of a swing type.

If the diagnosis starting button 99 is pressed, the swing analysis apparatus 20 regards indexes displayed on the data input screen at that time as indexes input by the user, and determines a swing type on the basis of the indexes. The "indexes" mentioned here indicate the type of region to which a position of the head at halfway back belongs, a numerical value of the rotation angle $\theta_{HWB}$ of the golf club 3 at halfway back, and a numerical value of the rotation angle $\theta_{TOP}$ of the golf club 3 at top.

Therefore, if the user 2 designates any one of the marks A to E on the data input screen, inputs numerical values of the rotation angles $\theta_{HWB}$ and $\theta_{TOP}$, and then presses the diagnosis starting button 99, the user can understand a swing type caused by a combination of the indexes.

2-3. Input data editing screen

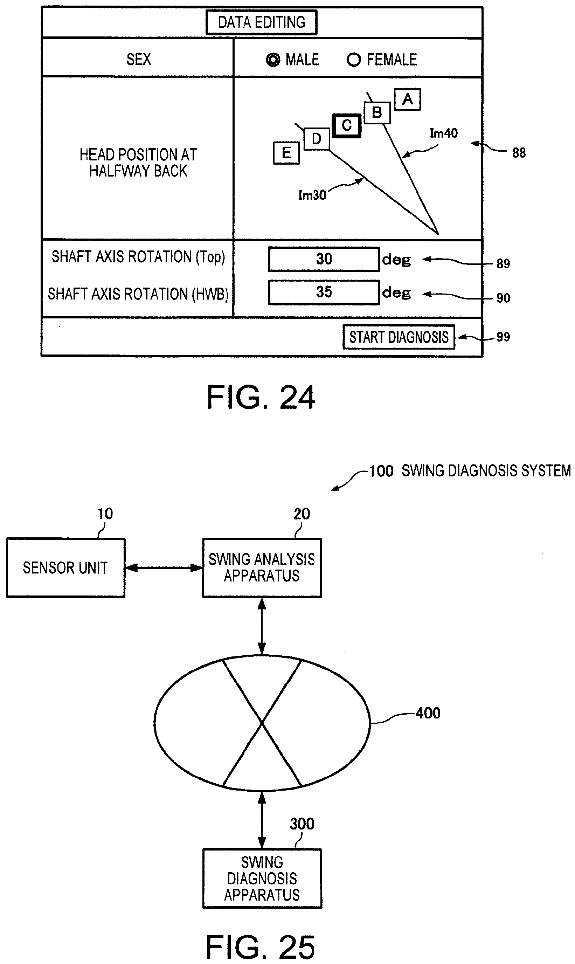

The processing section 21 may display an input data editing screen illustrated in Fig. 24 after the user 2 performs a swing. The input data editing screen illustrated in Fig. 24 displays indexes actually measured in the swing in a state in which the indexes can be edited at the respective portions of the data input screen illustrated in Fig. 23.

In this case, if the user 2 presses the diagnosis starting button 99 without editing the indexes, the user can understand a swing type of the swing which has been actually performed by the user as a determination result. If the user presses the diagnosis starting button 99 after editing the indexes, the user can understand how a swing type is changed according to the way to change indexes related to the user as a determination result.

2-4. Modification example using average value or intermediate value

The above-described processing section 21 performs determination of a swing type on the basis of a rotation angle at a predetermined timing during a backswing, but may perform the determination on the basis of an average value or an intermediate value of rotation angles in a predetermined period of time during a backswing.

For example, the predetermined period of time may be set as a period of time of a predetermined length with the time of starting a swing as a start time, may be set as a period of time in which an angle of the shaft axis with the time of starting a swing as a reference is included in a predetermined range, and may be set as a period of time until a position of the head is deviated from a predetermined region after starting a swing. The predetermined region may be, for example, a region interposed between a virtual plane obtained by rotating the XY plane by a predetermined angle (for example, +30 degrees) about the X axis so that the XY plane is directed substantially in a vertical direction, and the XY plane, and may be the region E closest to the feet of the user 2 among the regions A to E illustrated in Fig. 15.

The above-described processing section 21 performs determination of a swing type on the basis of a position of the head at a predetermined timing during a backswing, but may perform the determination on the basis of an average value or an intermediate value of positions of the head in a predetermined period of time during a backswing.

The predetermined period of time may be set as a period of time of a predetermined length with the time of starting a swing as a start time, and may be set as a period of time in which an angle of the shaft axis with the time of starting a swing as a reference is included in a predetermined range.

2-5. Modification example of system configuration

In the above-described embodiment, some or all of the functions of the swing analysis apparatus 20 may be mounted on the sensor unit 10 side, and some or all of the functions of the swing analysis apparatus 20 may be mounted on a server side which processes requests from the swing analysis apparatus 20.

In this case, for example, the user 2 accesses the server via the swing analysis apparatus 20 (or a terminal connected to a network), and uploads swing analysis data (the above-described indexes and the like regarding a swing) to the server. If the server determines a swing type on the basis of the uploaded swing analysis data (indexes and the like), the server provides information regarding the determination result (diagnosis result) to the swing analysis apparatus 20 (or the terminal connected to the network). The swing analysis apparatus 20 (or the terminal connected to the network) displays the provided determination result (diagnosis result) on a display section of the terminal.

Fig. 25 is a diagram illustrating an example of a swing diagnosis system using a server. As illustrated in Fig. 25, a swing diagnosis system 100 (an example of a calculation system) is configured to include a sensor unit 10 (an example of an inertial sensor), a swing analysis apparatus 20, and a swing diagnosis apparatus 300 (an example of a calculation apparatus).

The swing analysis apparatus 20 is implemented by an information terminal (client terminal) such as a smart phone or a personal computer, and the swing diagnosis apparatus 300 is implemented by a server which processes requests from the swing analysis apparatus 20.

Hardware configurations of the swing analysis apparatus 20 and the sensor unit 10 are fundamentally the same as those in the above-described embodiment. However, the swing analysis apparatus 20 may further include a communication section (not illustrated) which performs communication with the swing diagnosis apparatus 300 via a network 400. The swing diagnosis apparatus 300 may include, for example, a processing section (not illustrated), a storage section (not illustrated), and a communication section (not illustrated) which performs communication with the swing analysis apparatus 20 via the network 400.

The network 400 may be a wide area network (WAN) such as the Internet, and may be a local area network (LAN). The swing analysis apparatus 20 and the swing diagnosis apparatus 300 may communicate with each other through, for example, near field wireless communication or wired communication, without using the network 400. Here, it is assumed that the network 400 is used.

The processing section of the swing analysis apparatus 20 generates swing analysis data according to a swing of the user 2, and transmits the swing analysis data to the swing diagnosis apparatus 300 via the network 400.

The swing analysis data includes, for example, information indicating a position of the V zone (positions of the shaft plane and the Hogan plane) in XYZ coordinates, information indicating the rotation angle $\theta_{HWB}$ at halfway back, information indicating the rotation angle $\theta_{TOP}$ at top, and information indicating a position of the head at halfway back. Specific procedures of calculating the position of the V zone, the rotation angle $\theta_{HWB}$, the rotation angle $\theta_{TOP}$, and the position of the head are the same as described above.

If the swing analysis data transmitted by the swing analysis apparatus 20 is received via the network 400, the processing section of the swing diagnosis apparatus 300 determines a swing type of the user 2 on the basis of the information indicating the rotation angles $\theta_{HWB}$ and $\theta_{TOP}$ included in the swing analysis data. The processing section of the swing analysis apparatus 20 sets the determination regions A to E on the basis of the information indicating the position of the V zone included in the swing analysis data, and performs determination on the basis of the set determination regions A to E, and the information indicating the position of the head included in the swing analysis data, as necessary. Specific procedures of setting the determination regions or specific procedures of the determination are the same as described above.

The processing section of the swing diagnosis apparatus 300 generates determination result information, and transmits the determination result information to the swing analysis apparatus 20 via the network 400.

If the determination result information is received via the network 400, the processing section of the swing analysis apparatus 20 displays the determination result (diagnosis result) on the display section 25 on the basis of the determination result information.

Therefore, in the swing diagnosis system 100, among the functions of the swing analysis apparatus 20 in the above-described embodiment, the function regarding determination of a swing type is mainly mounted on the server (swing diagnosis apparatus 300) side.

Specifically, in the swing diagnosis system 100, among the functions of the swing analysis process, the function of calculating indexes (a rotation angle of the golf club and a position of the head at a predetermined timing) and the function of calculating the V zone are mounted on the swing analysis apparatus 20 side, and the function of setting determination regions on the basis of the V zone and the function of determining a swing type are mounted on the swing diagnosis apparatus 300 side.

However, allocation of the functions mounted on the swing analysis apparatus 20 side and the functions mounted on the swing diagnosis apparatus 300 side is not limited thereto. For example, the function of calculating the V zone may be mounted on the swing diagnosis apparatus 300 side.

In a case where the function of calculating the V zone is mounted on the swing diagnosis apparatus 300 side, information (measured data generated at address, golf club information, physical information, and the like) required to calculate the V zone is included in the swing analysis data.

In a case where some or all of the functions of the swing analysis apparatus 20 in the above-described embodiment are mounted on the swing diagnosis apparatus 300 side, program data and the like (data such as determination tables as necessary) required to realize the functions in the swing diagnosis apparatus 300 are stored in the storage section (not illustrated) of the swing diagnosis apparatus 300 in advance.

2-6. Modification example using HMD

In the above-described embodiment, a head mounted display (HMD) may be used as a display destination of a determination result (diagnosis result) or the like.

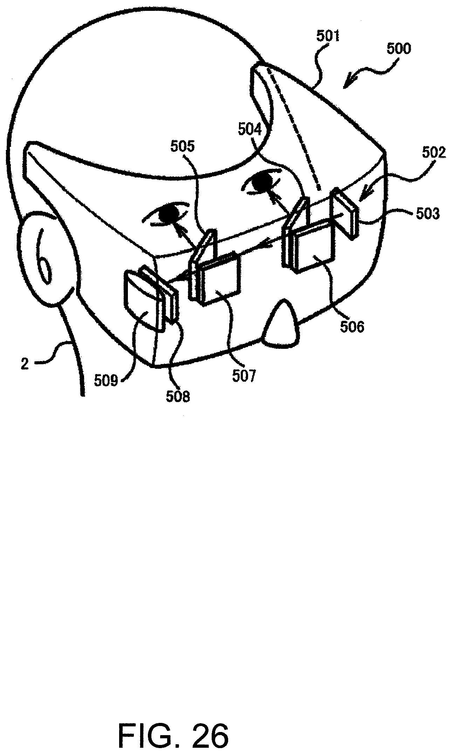

Fig. 26 is a diagram illustrating an example of a head mounted display (HMD).

As illustrated in Fig. 26, an HMD 500 includes a spectacle main body 501 mounted on the head of the user 2. The spectacle main body 501 is provided with a display section 502. The display section 502 integrates light beams emitted from an image display portion 503 with light beams directed toward the eyes of the user 2 from the external world, and thus overlaps a virtual image from the image display portion 503 with a real image of the external world viewed by the user 2.

The display section 502 is provided with, for example, the image display portion 503 such as a liquid crystal display (LCD), a first beam splitter 504, a second beam splitter 505, a first concave reflection mirror 506, a second concave reflection mirror 507, a shutter 508, and a convex lens 509.

The first beam splitter 504 is disposed on the front side of the left eye of the user 2, and partially transmits therethrough and partially reflects light emitted from the image display portion 503.

The second beam splitter 505 is disposed on the front side of the right eye of the user 2, and partially transmits therethrough and partially reflects the light which is partially transmitted from the first beam splitter 504.

The first concave reflection mirror 506 is disposed on the front side of the first beam splitter 504, and partially reflects the partially reflected light from the first beam splitter 504 so as to transmit the light through the first beam splitter 504, thereby guiding the light to the left eye of the user 2.

The second concave reflection mirror 507 is disposed on the front side of the second beam splitter 505, and partially reflects the partially reflected light from the second beam splitter 505 so as to transmit the light through the second beam splitter 505, thereby guiding the light to the right eye of the user 2.

The convex lens 509 guides the partially transmitted light from the second beam splitter 505 to the outside of the HMD 500 when the shutter 508 is open.

According to the HMD 500, the user 2 can understand necessary information such as a swing type thereof without holding the swing analysis apparatus 20 with the user's hand.

3. Operations and Effects of Embodiment

(1) The calculation apparatus (the swing analysis apparatus 20 or the swing diagnosis apparatus 300) according to the embodiment includes the processing section 21 which performs determination (steps S30 and S36) of a swing type on the basis of information (a rotation angle about a first axis (rotation axis) in a longitudinal direction of a shaft, a position of a ball hitting portion, and the like) regarding an attitude or a position of an exercise appliance (golf club 3) at a predetermined timing during a backswing.

Since it is considered that a tendency for the user 2 to perform a downswing depends on a backswing of the user 2, it is possible to sufficiently determine a swing type of the user 2 (it is possible to classify a swing type into an upper body type, a lower body type, a whole body type, and the like) simply on the basis of an attitude or a position of the exercise appliance at a predetermined timing during a backswing.

(2) In the calculation apparatus (the swing analysis apparatus 20 or the swing diagnosis apparatus 300) according to the embodiment, the information includes information regarding a rotation angle (for example, rotation angle $\theta_{HWB}$ or $\theta_{TOP}$) about the rotation axis of the shaft at the predetermined timing (a top timing, a halfway back timing, or the like) with the longitudinal direction of the shaft of the exercise appliance as the rotation axis.

Since it is considered that features of a swing of the user 2 appear in temporal changes of the rotation angle (for example, the rotation angle $\theta_{HWB}$ or $\theta_{TOP}$) about the shaft axis, it is possible to perform determination with high accuracy on the basis of the rotation angle (for example, the rotation angle $\theta_{HWB}$ or $\theta_{TOP}$) at the predetermined timing (a top timing, a halfway back timing, or the like).

(3) In the calculation apparatus (the swing analysis apparatus 20 or the swing diagnosis apparatus 300) according to the embodiment, the processing section 21 performs determination according to a range (for example, the ranges shown in the upper part, the intermediate part, and the lower part of Fig. 5) in which the rotation angle (for example, the rotation angle $\theta_{HWB}$ or $\theta_{TOP}$) is included.

It is possible to easily perform determination (classification of a swing) on the basis of a range in which the rotation angle (for example, the rotation angle $\theta_{HWB}$ or $\theta_{TOP}$) is included.

(4) In the calculation apparatus (the swing analysis apparatus 20 or the swing diagnosis apparatus 300) according to the embodiment, the predetermined timing includes two or more timings (a top timing, a halfway back timing, and the like).

It is possible to more increase the accuracy of determination on the basis of rotation angles (a combination of the rotation angles $\theta_{HWB}$ and $\theta_{TOP}$) at two or more timings than on the basis of a rotation angle (for example, one of the rotation angles $\theta_{HWB}$ and $\theta_{TOP}$) at a single timing.

(5) In the calculation apparatus (the swing analysis apparatus 20 or the swing diagnosis apparatus 300) according to the embodiment, the predetermined timing includes at least one of a halfway back timing $t_b$ and a top timing $t_2$. Since it is considered that features of a swing of the user 2 appear in a rotation angle (the rotation angle $\theta_{HWB}$ or the rotation angle $\theta_{TOP}$) at halfway back or at top, it is possible to reduce an amount of necessary information and also to increase the accuracy of determination on the basis of at least one rotation angle (at least one of the rotation angles $\theta_{HWB}$ and $\theta_{TOP}$) at at least one of the halfway back and top timings ($t_b$ and $t_2$).

(6) In the calculation apparatus (the swing analysis apparatus 20 or the swing diagnosis apparatus 300) according to the embodiment, the swing type may be any one of an upper body type, a lower body type, and a whole body type. Therefore, a swing type of the user can be classified as any one of the upper body type, the lower body type, and the whole body type.

(7) In the calculation apparatus (the swing analysis apparatus 20 or the swing diagnosis apparatus 300) according to the embodiment, the information regarding an attitude or a position is information regarding a position of a ball hitting portion (head) of the exercise appliance (golf club 3) at a predetermined timing (a halfway back timing or the like).

Since it is considered that features of a swing of the user 2 appear in a trajectory of the ball hitting portion (head), it is possible to determine a swing type with high accuracy on the basis of a position of the ball hitting portion (head) at a predetermined timing (a halfway back timing or the like).

(8) In the calculation apparatus (the swing analysis apparatus 20 or the swing diagnosis apparatus 300) according to the embodiment, the processing section 21 performs determination according to a region (for example, the determination regions A to E) in which a position of the ball hitting portion (head) is included.

It is possible to easily perform determination on the basis of the region. A boundary (for example, the interfaces 40A to 40D) of the region (for example, the determination regions A to E) may be fixed, and may be variable.

(9) In the calculation apparatus (the swing analysis apparatus 20 or the swing diagnosis apparatus 300) according to the embodiment, the processing section 21 sets a boundary (for example, the interfaces 40A to 40D) of the region (for example, the determination regions A to E) on the basis of a first virtual plane (shaft plane 30) specified by a longitudinal direction (y axis direction) of the shaft of the exercise appliance (golf club 3) and a target hit ball direction (X axis direction) at the time of starting a swing (step S32).

If a boundary is defined on the basis of the shaft axis direction of the exercise appliance (golf club 3) at the time of starting a swing, it is possible to perform determination regardless of a habit (a habit of an address attitude) of the way of the user 2 holding the exercise appliance or a length of the exercise appliance.

(10) In the calculation apparatus (the swing analysis apparatus 20 or the swing diagnosis apparatus 300) according to the embodiment, the processing section 21 sets a boundary (for example, the interfaces 40A to 40D) of the region (for example, the determination regions A to E) on the basis of a second virtual plane (Hogan plane 40) specified by a shaft axis direction of the exercise appliance (golf club 3), a target hit ball direction, and the physical information 244 of the user 2, at the time of starting a swing (step S32).

If a boundary is defined on the basis of the physical information 244 of the user 2, it is possible to perform determination regardless of a physique of the user 2.

(11) In the calculation apparatus according to the present embodiment, the second virtual plane may be a plane (Hogan plane) specified by a direction from a predetermined position between the head and the chest of the user toward a position of the ball hitting portion of the exercise appliance, and the target hit ball direction (X axis direction). Therefore, a so-called Hogan plane can be used to define a boundary.

(12) In the calculation apparatus (the swing analysis apparatus 20 or the swing diagnosis apparatus 300) according to the embodiment, the predetermined timing includes at least a halfway back timing $t_b$.

Since it is considered that features of a swing of the user 2 appear in a position of the ball hitting portion (head), it is possible to reduce an amount of necessary information and also to increase the accuracy of determination on the basis of a position of the ball hitting portion (head) at halfway back.

(13) In the calculation apparatus according to the present embodiment, the swing type is any one of a lower body type, an upper body type, a first whole body type, a second whole body type, and a third whole body type. Therefore, a swing type of the user can be classified as any one of the upper body type, the lower body type, and the whole body type.

(14) In the calculation apparatus according to the present embodiment, the rotation angle is a relative value obtained when the shaft changes from a first state to a second state.

(15) In the calculation apparatus according to the present embodiment, the first state is a standing still state (at the time of starting a swing or at address) before starting a swing action, and the second state is an action state (a top or halfway back timing) after starting the swing action.

(16) In the calculation apparatus (the swing analysis apparatus 20 or the swing diagnosis apparatus 300) according to the embodiment, the information may be information indicating an average value or an intermediate value of the rotation angles in a predetermined period of time during a backswing.

If the average value or the intermediate value is used, it is possible to prevent the influence which a rotation angle measurement error exerts on a determination result.

(17) In the calculation apparatus (the swing analysis apparatus 20 or the swing diagnosis apparatus 300) according to the embodiment, the information regarding an attitude or a position may be information indicating an average value or an intermediate value of a position in a predetermined period of time during a backswing.

If the average value or the intermediate value is used, it is possible to prevent the influence which a position measurement error exerts on a determination result.

(18) In the calculation apparatus (the swing analysis apparatus 20 or the swing diagnosis apparatus 300) according to the embodiment, the information regarding an attitude or a position is information generated on the basis of an output (for example, angular velocity data or acceleration data) from an inertial sensor (sensor unit 10).

It is possible to obtain necessary information in a smaller calculation amount on the basis of the output (for example, angular velocity data or acceleration data) from the inertial sensor (sensor unit 10) than on the basis of a swing image or the like, and thus high efficiency is ensured.

4. Other Modification Examples

The invention is not limited to the present embodiment, and may be variously modified within the scope of the spirit of the invention.

In the above-described embodiment, the acceleration sensor 12 and the angular velocity sensor 14 are built into and are thus integrally formed as the sensor unit 10, but the acceleration sensor 12 and the angular velocity sensor 14 may not be integrally formed. Alternatively, the acceleration sensor 12 and the angular velocity sensor 14 may not be built into the sensor unit 10, and may be directly mounted on the golf club 3 or the user 2. In the above-described embodiment, the sensor unit 10 and the swing analysis apparatus 20 are separately provided, but may be integrally formed so as to be attached to the golf club 3 or the user 2. Some or all of the functions of the swing analysis apparatus 20 may be mounted on the sensor unit 10 side.

In the above-described embodiment, the swing diagnosis system (swing analysis apparatus) analyzing a golf swing has been exemplified, but the invention is applicable to a swing diagnosis system (swing analysis apparatus) analyzing a swing in various sports such as tennis or baseball.

The above-described embodiment and modification examples are only examples, and the invention is not limited thereto. For example, the embodiment and the respective modification examples may be combined with each other as appropriate.

For example, the invention includes substantially the same configuration (for example, a configuration in which functions, methods, and results are the same, or a configuration in which objects and effects are the same) as the configuration described in the embodiment. The invention includes a configuration in which an inessential part of the configuration described in the embodiment is replaced with another part. The invention includes a configuration which achieves the same operation and effect or a configuration capable of achieving the same object as in the configuration described in the embodiment. The invention includes a configuration in which a well-known technique is added to the configuration described in the embodiment.

**Claims**

1.  A calculation apparatus
    adapted to perform determination of a swing type on the basis of information regarding an attitude or a position of an exercise appliance at a predetermined timing during a backswing.

2.  The calculation apparatus according to claim 1,
    wherein the information includes information regarding a rotation angle about a rotation axis of a shaft at the predetermined timing with a longitudinal direction of the shaft of the exercise appliance as the rotation axis.

3.  The calculation apparatus according to claim 2,
    further comprising a processing section adapted to perform the determination according to a range in which the rotation angle is included.

4.  The calculation apparatus according to any one of the preceding claims,
    wherein the predetermined timing includes two or more timings.

5.  The calculation apparatus according to any one of the preceding claims,

wherein the predetermined timing includes at least one of a halfway back timing and a top timing.

6. The calculation apparatus according to any one of the preceding claims,
wherein the swing type is any one of an upper body type, a lower body type, and a whole body type.

7. The calculation apparatus according to any one of the preceding claims,
wherein the information includes information regarding a position of a ball hitting portion of the exercise appliance at the predetermined timing.

8. The calculation apparatus according to claim 7,
wherein the determination is performed according to a region in which the position is included.

9. The calculation apparatus according to claim 8,
wherein a boundary of the region is set on the basis of a first virtual plane specified by the longitudinal direction of the shaft of the exercise appliance at the time of starting a swing, and a target hit ball direction.

10. The calculation apparatus according to claim 8 or 9,
wherein a boundary of the region is set on the basis of a second virtual plane specified by the longitudinal direction of the shaft of the exercise appliance at the time of starting a swing, a target hit ball direction, and physical information of a user.

11. The calculation apparatus according to claim 10,
wherein the second virtual plane is a plane specified by a direction from a predetermined position between the head and the chest of the user toward a position of the ball hitting portion of the exercise appliance at the time of starting the swing, and the target hit ball direction.

12. The calculation apparatus according to any one of the preceding claims,
wherein the predetermined timing includes at least a halfway back timing.

13. The calculation apparatus according to any one of the preceding claims,
wherein the swing type is any one of a lower body type, an upper body type, a first whole body type, a second whole body type, and a third whole body type.

14. The calculation apparatus according to any one of the preceding claims,
wherein the rotation angle is a relative value obtained when the shaft changes from a first state to a second state.

15. The calculation apparatus according to claim 14,
wherein the first state is a standing still state before starting a swing action, and the second state is an action state after starting the swing action.

16. The calculation apparatus according to any one of the preceding claims,
wherein the information is information indicating an average value or an intermediate value of the rotation angle in a predetermined period of time during the backswing.

17. The calculation apparatus according to any one of the preceding claims,
wherein the information is information indicating an average value or an intermediate value of the position in a predetermined period of time during the backswing.

18. The calculation apparatus according to any one of the preceding claims,
wherein the information is information generated on the basis of an output from an inertial sensor.

19. A calculation system comprising:

    a calculation apparatus according to any one of the preceding claims;

and

    an inertial sensor that outputs data which is a basis of the information.

20. A calculation method comprising:

a determination procedure of performing determination of a swing type on the basis of information regarding an attitude or a position of an exercise appliance at a predetermined timing during a backswing.

21. A recording medium storing therein a calculation program causing a computer to execute:

a determination procedure of performing determination of a swing type on the basis of information regarding an attitude or a position of an exercise appliance at a predetermined timing during a backswing.

2

1 SWING DIAGNOSIS SYSTEM

20 SWING ANALYSIS APPARATUS

10 SENSOR UNIT

3

4

FIG. 1

3

x

z

y

FIG. 2

START

S1

PERFORM INPUT OPERATION OF PHYSICAL
INFORMATION AND GOLF CLUB INFORMATION

S2

PERFORM MEASUREMENT STARTING OPERATION

S3

IS THERE
NOTIFICATION OF INSTRUCTION
FOR ADDRESS ATTITUDE?

N

Y

S4

TAKE ADDRESS ATTITUDE SO THAT AXIS IN
LONGITUDINAL DIRECTION OF SHAFT
OF GOLF CLUB IS PERPENDICULAR TO
TARGET LINE, AND STAND STILL FOR
PREDETERMINED PERIOD OF TIME OR MORE

S5

IS THERE
NOTIFICATION OF PERMITTING
SWING?

N

Y

S6

HIT BALL BY PERFORMING SWING ACTION

END

FIG. 3

# FIG. 4

| SWING TYPE | ROTATION ANGLE $\theta_{HWB}$ | ROTATION ANGLE $\theta_{TOP}$ |
|---|---|---|
| UPPER BODY TYPE | 40 DEGREES OR MORE | 100 DEGREES OR MORE |
| LOWER BODY TYPE | 0 DEGREES OR LESS | 10 DEGREES OR LESS |
| WHOLE BODY TYPE | 25 DEGREES $\pm \alpha$ | 50 DEGREES $\pm \beta$ |

# FIG. 5

| SWING TYPE | REGION IN WHICH HEAD POSITION IS INCLUDED AT HWB |
|---|---|
| LOWER BODY TYPE | A |
| FIRST WHOLE BODY TYPE | B |
| SECOND WHOLE BODY TYPE | C |
| THIRD WHOLE BODY TYPE | D |
| UPPER BODY TYPE | E |

# FIG. 6

START

START ACQUISITION OF MEASURED DATA ┌S10

IS STANDING STILL STATE DETECTED FOR PREDETERMINED PERIOD OF TIME? ┌S12  N

Y

NOTIFY USER OF PERMISSION OF SWING STARTING ┌S18

COMPUTE INITIAL POSITION AND INITIAL ATTITUDE OF SENSOR UNIT ┌S20

DETECT TIMINGS OF SWING STARTING AND TOP ┌S22

COMPUTE POSITION AND ATTITUDE OF SENSOR UNIT DURING SWING ACTION ┌S24

DETECT HALFWAY BACK TIMING ┌S25

DETECT HALFWAY BCOMPUTE ROTATION ANGLE AT HALFWAY BACK AND ROTATION ANGLE AT TOPACK TIMING ┌S26

ARE ROTATION ANGLES WITHIN PREDETERMINED RANGES? ┌S28

Y                                    N

DETERMINE SWING TYPE ON THE BASIS OF RANGE IN WHICH COMBINATION OF RELATIVE ROTATION ANGLES IS INCLUDED ┌S30

SET DETERMINATION REGION ┌S32

COMPUTE POSITION OF HEAD AT HALFWAY BACK ┌S34

DETERMINE SWING TYPE ON THE BASIS OF REGION IN WHICH POSITION IS INCLUDED ┌S36

GENERATE AND DISPLAY DETERMINATION RESULT INFORMATION ┌S37

END

# FIG. 7

ADDRESS          HALFWAY BACK          TOP

# FIG. 8

DETECTION OF SWING STARTING AND TOP

S200
PERFORM BIAS CORRECTION ON MEASURED DATA

S210
COMPUTE COMBINED VALUE $n_0(t)$ OF ANGULAR VELOCITIES

S220
CONVERT COMBINED VALUE $n_0(t)$ INTO NORMALIZED COMBINED VALUE $n(t)$

S230
COMPUTE DERIVATIVE $dn(t)$ OF COMBINED VALUE $n(t)$

S240
OF TIME POINTS AT WHICH DERIVATIVE $dn(t)$ OF THE COMBINED VALUE BECOMES MAXIMUM AND MINIMUM, SPECIFY EARLIER TIME POINT AS IMPACT MEASUREMENT TIME POINT $t_3$

S250
SPECIFY TIME POINT OF MINIMUM POINT AT WHICH $n(t)$ IS CLOSE TO 0 BEFORE MEASUREMENT TIME POINT $t_3$, AS TOP MEASUREMENT TIME POINT $t_2$

S260
SPECIFY INTERVAL IN WHICH $n(t)$ IS EQUAL TO OR SMALLER THAN THRESHOLD VALUE BEFORE AND AFTER MEASUREMENT TIME POINT $t_2$, AS TOP INTERVAL

S270
SPECIFY LAST TIME POINT AT WHICH $n(t)$ IS EQUAL TO OR SMALLER THAN THRESHOLD VALUE BEFORE STARTING TIME POINT OF TOP INTERVAL, AS SWING STARTING MEASUREMENT TIME POINT $t_1$

END

FIG. 9

ANGULAR
VELOCITY [dps]

FIG. 10

COMBINED VALUE OF
ANGULAR VELOCITY
(NORMALIZED TO 0 TO 100)

FIG. 11

DERIVATIVE OF
COMBINED VALUE OF
ANGULAR VELOCITY

FIG. 12

DETECTION OF HALFWAY BACK

┌─ S280

COMPUTE POSITION OF HEAD AND POSITION
OF GRIP AT EACH TIME POINT t IN BACKSWING
(SWING STARTING MEASUREMENT TIME POINT
$t_1$ TO TOP MEASUREMENT TIME POINT $t_2$)

┌─ S290

COMPUTE DIFFERENCE $\Delta Z$ BETWEEN Z
AXIS COMPONENT OF POSITION OF GRIP
AND Z AXIS COMPONENT OF POSITION OF
HEAD WITH RESPECT TO TIME POINT t

┌─ S300

SPECIFY TIME POINT AT WHICH SIGN
OF DIFFERENCE $\Delta$ CHANGES FROM
NEGATIVE TO POSITIVE, AS MEASUREMENT
TIME POINT $t_b$ OF HALFWAY BACK

END

# FIG. 13

SETTING OF DETERMINATION REGION

┌─ S321

SPECIFY SHAFT PLANE

┌─ S322

SPECIFY HOGAN PLANE

┌─ S323

MULTIPLY ANGLE $\Delta\theta$ (ANGLE OF V ZONE)
FORMED BETWEEN SHAFT PLANE AND
HOGAN PLANE BY PREDETERMINED
COEFFICIENT, SO AS TO DETERMINE ANGLE
PITCH $\Delta\theta'$ OF DETERMINATION REGION

┌─ S324

SET DETERMINATION REGIONS A, B, C, D
AND E ON THE BASIS OF SHAFT PLANE
OR HOGAN PLANE AND ANGLE PITCH $\Delta\theta'$

END

# FIG. 14

FIG. 15

FIG. 16

SPECIFYING OF SHAFT PLANE

S100

COMPUTE COORDINATES $(0,G_Y,G_Z)$ OF POSITION OF GRIP END BY USING ACCELERATION DATA MEASURED AT STANDING STILL BY SENSOR UNIT AND CLUB SPECIFICATION INFORMATION WITH POSITION OF HEAD OF GOLF CLUB AS ORIGIN $(0,0,0)$

S110

MULTIPLY COORDINATES $(0,G_Y,G_Z)$ OF POSITION OF GRIP END BY SCALE FACTOR S SO AS TO COMPUTE COORDINATES $(0,S_Y,S_Z)$ OF MIDPOINT S3 OF VERTEX S1 AND VERTEX S2 OF SHAFT PLANE

S120

COMPUTE COORDINATES $(-TL/2,0,0)$ OF VERTEX T1 OF SHAFT PLANE, COORDINATES $(TL/2,0,0)$ OF VERTEX T2, COORDINATES $(-TL/2,S_Y,S_Z)$ OF VERTEX S1 AND COORDINATES $(TL/2,S_Y,S_Z)$ OF VERTEX S2 BY USING COORDINATES $(0,S_Y,S_Z)$ OF MIDPOINT S3 AND WIDTH TL OF SHAFT PLANE IN X AXIS DIRECTION

END

## FIG. 17

## FIG. 18

# FIG. 19

SPECIFYING OF HOGAN PLANE

↓

S200

ESTIMATE PREDETERMINED POSITION ON LINE SEGMENT CONNECTING BOTH OF SHOULDERS OF USER BY USING COORDINATES $(0,G_Y,G_Z)$ OF POSITION OF GRIP END, AND PHYSICAL INFORMATION OF USER, AND COMPUTE COORDINATES $(A_X,A_Y,A_Z)$ THEREOF

↓

S210

MULTIPLY Y COORDINATE $A_Y$ AND Z COORDINATE $A_Z$ OF PREDETERMINED POSITION BY SCALE FACTOR H, SO AS TO COMPUTE COORDINATES $(0,H_Y,H_Z)$ OF MIDPOINT H3 OF VERTEX H1 AND VERTEX H2 OF HOGAN PLANE

↓

S220

COMPUTE COORDINATES $(-TL/2,0,0)$ OF VERTEX T1 OF HOGAN PLANE, COORDINATES $(TL/2,0,0)$ OF VERTEX T2, COORDINATES $(-TL/2,H_Y,H_Z)$ OF VERTEX H1, AND COORDINATES $(TL/2,H_Y,H_Z)$ OF VERTEX H2 BY USING COORDINATES $(0,H_Y,H_Z)$ OF MIDPOINT H3 AND WIDTH TL OF HOGAN PLANE IN THE X AXIS DIRECTION

↓

END

# FIG. 20

FIG. 21

DIAGNOSIS RESULT

SWING TYPE

YOUR SWING TYPE IS
**UPPER BODY TYPE** ← 77

IN THIS TYPE, YOU HAVE STRONG TENDENCY
TO RAISE CLUB WITH UPPER BODY, AND
THUS HAND-SWING SOMEWHAT EASILY ← 78
OCCURS. POWER CAN BE EFFICIENTLY
TRANSMITTED TO BALL BY USING THE
WHOLE BODY WITH GOOD BALANCE.

RETURN

## FIG. 22

DATA INPUT

| SEX | ◎ MALE   O FEMALE |
|---|---|
| HEAD POSITION AT HALFWAY BACK | A B C D E lm40 lm30 ← 88 |
| SHAFT AXIS ROTATION (Top) | deg ← 89 |
| SHAFT AXIS ROTATION (HWB) | deg ← 90 |

START DIAGNOSIS ← 99

## FIG. 23

| DATA EDITING | |
|---|---|
| SEX | ◉ MALE   ○ FEMALE |
| HEAD POSITION AT HALFWAY BACK | [A] [B] [C] [D] [E]  Im40  Im30  ~88 |
| SHAFT AXIS ROTATION (Top) | 30  deg  ~89 |
| SHAFT AXIS ROTATION (HWB) | 35  deg  ~90 |
| | START DIAGNOSIS  ~99 |

## FIG. 24

100 SWING DIAGNOSIS SYSTEM

10 SENSOR UNIT ⟷ 20 SWING ANALYSIS APPARATUS

400

300 SWING DIAGNOSIS APPARATUS

## FIG. 25

FIG. 26

Europäisches
Patentamt

European
Patent Office

Office européen
des brevets

# EUROPEAN SEARCH REPORT

**Application Number**

EP 16 18 1226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/289354 A1 (COTTAM ROGER J [US] ET AL) 15 November 2012 (2012-11-15) * paragraphs [0071], [0072], [0075], [0083], [0085], [0087] * | 1-21 | INV. G06K9/00 |
| X | US 2007/135225 A1 (NIEMINEN HEIKKI V [FI] ET AL) 14 June 2007 (2007-06-14) | 1,19-21 | |
| A | * paragraphs [0007], [0045], [0046], [0066] - [0098]; figure 3 * * paragraphs [0142] - [0168], [0186] - [0204]; claim 1 * | 2-18 | |
| A | EP 2 874 134 A1 (SEIKO EPSON CORP [JP]) 20 May 2015 (2015-05-20) * paragraphs [0004] - [0012], [0020], [0038], [0053] - [0055], [0061]; claims 1,4 * | 1-21 | |
| A | US 2015/012240 A1 (SATO MASAFUMI [JP]) 8 January 2015 (2015-01-08) * paragraphs [0066], [0067] * | 1-21 | TECHNICAL FIELDS SEARCHED (IPC) |
| A | US 6 293 802 B1 (AHLGREN DAVID R [US]) 25 September 2001 (2001-09-25) * table 1 * | 1-21 | G06K A61B A63B |

The present search report has been drawn up for all claims

| Place of search | Date of completion of the search | Examiner |
|---|---|---|
| The Hague | 19 December 2016 | Meurisse, Wim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 1226

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2016

| Patent document cited in search report | | Publication date | Patent family member(s) | | Publication date |
|---|---|---|---|---|---|
| US 2012289354 | A1 | 15-11-2012 | US 2012289354 A1<br>US 2013217519 A1<br>US 2013237336 A1 | | 15-11-2012<br>22-08-2013<br>12-09-2013 |
| US 2007135225 | A1 | 14-06-2007 | US 2007135225 A1<br>WO 2007069014 A1 | | 14-06-2007<br>21-06-2007 |
| EP 2874134 | A1 | 20-05-2015 | CN 104645595 A<br>EP 2874134 A1<br>JP 2015097556 A<br>US 2015142375 A1 | | 27-05-2015<br>20-05-2015<br>28-05-2015<br>21-05-2015 |
| US 2015012240 | A1 | 08-01-2015 | CN 104274964 A<br>JP 2015013007 A<br>KR 20150005447 A<br>TW 201501753 A<br>US 2015012240 A1 | | 14-01-2015<br>22-01-2015<br>14-01-2015<br>16-01-2015<br>08-01-2015 |
| US 6293802 | B1 | 25-09-2001 | NONE | | |

For more details about this annex : see Official Journal of the European Patent Office, No. 12/82

**REFERENCES CITED IN THE DESCRIPTION**

**Patent documents cited in the description**

•   JP 2004129687 A